(19)

Europäisches
Patentamt
European
Patent Office
Office européen
des brevets

(11) **EP 3 086 320 A1**

(12) **EUROPEAN PATENT APPLICATION**

(43) Date of publication:
**26.10.2016  Bulletin 2016/43**

(21) Application number: **16166159.0**

(22) Date of filing: **20.04.2016**

(51) Int Cl.:
**G11B 27/031** *(2006.01)*          **G11B 27/10** *(2006.01)*
**G11B 27/19** *(2006.01)*          **G11B 27/30** *(2006.01)*
**A63B 69/00** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority:  **23.04.2015   DE 102015207415**

(71) Applicant: **Adidas AG**
**91074 Herzogenaurach (DE)**

(72) Inventors:
• **KIRK, Robert Frank**
**91074 Herzogenaurach (DE)**

• **ZWICK, Constantin**
**91074 Herzogenaurach (DE)**
• **KÖRGER, Harald**
**91074 Herzogenaurach (DE)**
• **SCHULDHAUS, Dominik**
**91052 Erlangen (DE)**
• **ESKOFIER, Björn Michael**
**91052 Erlangen (DE)**
• **STÖVE, Maike Petra**
**96114 Hirschaid (DE)**

(74) Representative: **Wegner, Hans**
**Bardehle Pagenberg Partnerschaft mbB
Patentanwälte, Rechtsanwälte
Prinzregentenplatz 7
81675 München (DE)**

(54) **METHOD AND DEVICE FOR ASSOCIATING FRAMES IN A VIDEO OF AN ACTIVITY OF A PERSON WITH AN EVENT**

(57)    The present invention relates to a method for associating frames in a video of an activity of a person with an event, comprising the steps of (a.) recording a video of an activity of a person; (b.) storing a time-series of sensor data (82) obtained from a sensor assembly (12) comprising at least one sensor (31, 32, 33, 34, 35) coupled to the person while the person is performing the activity; (c.) synchronizing the video with the sensor data (82); (d.) detecting an event in the time-series; and (e.) associating the event with at least one corresponding frame in the video showing the event.

FIG 1

EP 3 086 320 A1

**Description**

I. Field of the invention

The present invention relates to a method and system for associating frames in a video of an activity of a person with an event.

II. Technical background

The analysis of human activities is required for different applications, like medical assessments, smart environments and sports applications. Sports applications are of special interest for professional and recreational use. This includes coordination and performance analysis of athletes. Monitoring athletes during training or competition is essential to provide pertinent feedback. Furthermore, a feedback system can motivate to increase daily sports activities and to improve individual fitness.

For example athletes performing in a match desire to obtain a video summary of their performance, e.g. a video showing their soccer kicks or tricks, to obtain feedback and to improve their abilities. However, watching the entire sports activity, e.g. a soccer match, to cut the relevant sequences manually for each player in order to provide him with a video summary is a time-consuming task. Thus, this kind of analysis is only done in the professional area (e.g. prime league soccer clubs) where a staff of trainers and assistants supports the athletes. In the area of mass and recreational sports, such kinds of video analyses and video summaries are not established due to their time-consuming and elaborate nature.

On the other hand, body worn inertial-magnetic sensors can also be used for analyzing human activities. They can capture kinematics of human motion by evaluating the movement of an integrated mass. The movement is caused by inertial forces. Alternatively, they can capture orientation of human motion by evaluation of a magnetic sensor orientation with respect to external magnetic fields. Such sensors offer advantages like miniaturization, being light-weight and inexpensive. They can be integrated in sportswear and acquire movement and orientation data over a long period of time in unconstrained environments. The data acquired by such sensors can either be processed in real-time (e.g. online processing) or can be stored for later processing when the particular activity is finished (off-line processing).

An example scenario for real-time processing is an athlete wearing a body sensor network including inertial and/or magnetic sensors measuring the accelerations and angular velocities at different parts of the body. The acquired data is transmitted to a mobile device by wireless technology like Bluetooth ®, BTLE (Bluetooth low energy), WLAN, ZigBee ®, ANT ®, Ant+, or the like. The device can evaluate and interpret the data by real-time processing. Parameters like the number of steps, step sizes, running speed, running distance, speed, energy expenditure and the like can be computed. Finally, a performance feedback can be given to the athlete by vision, speech, vibration or the like. Real-time capability demands a feedback until a certain timestamp.

For off-line processing, data from the sensors is stored in a memory. For example, the sensors can be connected to a data logger by thin wires. Alternatively, the sensors can transmit the data to the data logger wirelessly, for example by means of the wireless technologies mentioned above. After the activity the data logger is connected to a computer, for example via USB or any other suitable connection, and the data is transferred to the computer for off-line processing. The data is then processed on the computer to obtain for example running distance, speed, energy expenditure or the like.

Current online and off-line processing methods of sensor-based data quantify activities which last over a long period of time like running. Thus, these methods do not determine short, frequently occurring events in sports like kicking in soccer, tennis strokes, lay-ups in basketball, or the like. An event is defined as a part of a human activity that has a short and restricted duration.

In summary, video based systems to analyze human activity, in particular a sports activity, and to provide a video feedback or summary are currently time-consuming and subject to the professional area. On the other hand, current methods that process data acquired from body-worn sensors deliver summary statistics relating to the entire activity (e.g. a match), but do not focus on particular events (e.g. shots). Furthermore, it is not possible to analyze a motion sequence (e.g. a kick) in detail based on data acquired from body-worn sensors.

For example, US 2012123733 A1 relates to a method for human movement recognition comprising the steps of: retrieving successive measuring data for human movement recognition from an inertial measurement unit; dividing the successive measuring data to generate at least a human movement pattern waveform if the successive measuring data conforms to a specific human movement pattern; quantifying the at least a human movement pattern waveform to generate at least a human movement sequence; and determining a human movement corresponding to the inertial measurement unit by comparing the at least a human movement sequence and a plurality of reference human movement sequences.

US 20120167684 A1 discloses a selective motion recognition apparatus using an inertial sensor. The selective motion recognition apparatus using an inertial sensor includes: a sensor unit; a selection unit that outputs a sensor selection signal; and a motion detection unit that receives an angular velocity sensor data and an acceleration sensor data output from the sensor unit.

US 8702516 B2 is directed to the recognition of events within motion data including but not limited to motion capture data obtained from portable wireless motion capture elements such as visual markers and sensors, radio frequency identification tags and motion sensors within mobile device computer systems, or calculated based on analyzed movement associated with the same user, other user, historical user or group of users.

According to US 2013/027 4635 A1 a sensor module is physically coupled to an object during an athletic activity conducted by a user. An athletic activity monitoring method for use with the sensor module includes the steps of detecting movement of the object, recording movement data, identifying a matching athletic motion from a plurality of reference motions by comparing the movement data to data associated with the plurality of reference motions, and providing an output to the user that conveys the identity of the matching athletic motion.

US 2013/027 4904 A1 is directed to a method for monitoring an individual engaged in athletic activity including detecting movement of the individual at a first time, using a sensor module coupled to the individual, determining that the movement of the individual corresponds to a predetermined activation movement, entering an active state of the sensor module in response to the determination that the movement of the individual corresponds to the predetermined activation movement, and detecting movement of the individual at a second time, using the sensor module in the active state.

It is therefore an object of the present invention to provide a method for providing a video summary of an activity of a person, in particular a sports activity, which is simple, fast, and provides the video summary immediately after the activity without time-consuming manual cutting of videos. A further object of the present invention relates to providing a corresponding system.

These and other objects which become apparent when reading the following description are solved by the method in accordance with claim 1 and a system in accordance with claim 28.

Further prior art is disclosed in WO 02 /067 187 A1, DE 10 2006 060 482 A1 and US 2015 / 0 105 884 A1.

III. Summary of the invention

According to a first aspect of the present invention, a method for associating frames in a video of an activity of a person with an event, comprises the steps: (a.) recording a video of an activity of a person; (b.) storing a time-series of sensor data obtained from a sensor assembly comprising at least one sensor coupled to the person while the person is performing the activity; (c.) synchronizing the video with the sensor data; (d.) detecting an event in the time-series; and (e.) associating the event with at least one corresponding frame in the video showing the event.

The method according to the invention provides a video summary of an activity of a person, in particular a sports activity, which is simple, fast and provides the video summary immediately. In particular, the frames of the video which show the desired events (e.g. kicks or tricks) of e.g. a soccer player do not have to be cut manually, but are identified and selected based on the stored time-series of the sensor data. To this end, an event (e.g. a kick or a trick) is detected in the time-series and associated with at least one corresponding frame in the video showing the event. To allow for an exact mapping of the events detected in the time-series to the relevant frames in the video, the video and the sensor data are synchronized.

The method according to the invention allows to automatically obtain a highlight reel (or "show reel") after an activity, e.g. a soccer match. "Highlight reel" or "show reel" in the context of the present invention are understood as a collection of video sequences which share a common property. One common property could for example be that all video sequences of the highlight reel show kicks and/or passes and/or tricks, etc. of a certain player. Another highlight reel could show all defensive events of a goal keeper. Furthermore, a highlight reel could show specific tricks that a player made, for example keepy-uppy or around-the-world. The property does not necessarily relate to a certain player. It could also be possible, for example, that the highlight reel shows all shots made in a match above a certain ball speed (e.g. 100 km/h) independent of the player.

A sensor assembly in the context of the present invention is understood as containing at least one sensor. The sensor assembly may further comprise additional components for supporting the sensor, e.g. a housing, power supply, analog-to-digital converter, processor or microcontroller, memory, etc.). The sensor assembly may also comprise a plurality of sensors, e.g. an accelerometer, a gyroscope, a magnetic field sensor, etc. in this case, the data from the different sensor may be combined into a single time-series. The sensor assembly may also comprise a memory for storing the time-series of sensor data.

The method may further comprise the step of using the at least one frame to generate a second video showing predetermined events of the activity of the person. In this way, an athlete, e.g. a soccer player may obtain a video showing his actions during a match which he is interested in. For example, the video may show all his kicks and passes. A further example is a video which shows a highlight video of pre-defined players, a highlight video for all shots during a match, or a highlight video of all tricks. Another example is a video that shows all shots from the best friend of a certain player.

The step of synchronizing the video with the sensor data may comprise detecting a predetermined synchronization event in the time-series and in at least one frame in the video. For example, a soccer player may perform a certain predetermined movement which may easily be detected in the video and in the time-series of the sensor data. The detected data points in the time-series and the detected frames in the video may then obtain the same time-stamp to synchronize the video with the time-series. In this way, a simple synchronization is achieved.

The step of synchronizing the video with the sensor data may alternatively or additionally comprise the step of receiving a wireless signal from a transmitter (or a transceiver, i.e. a combined transmitter and receiver) contained in the sensor assembly. For example, the sensor assembly may comprise a RFID, NFC, Bluetooth (BT), Bluetooth Low Energy (BTLE), or WLAN module for transmitting such a signal. For example, when the person enters a sports ground, a corresponding receiver module installed at the sports ground receives the wireless signal from the transmitter contained in the sensor assembly and synchronizes the camera with the sensor.

The wireless signal may comprise a timestamp of a real time clock (RTC) contained in the sensor assembly. This timestamp enables the camera to synchronize with the RTC of the sensor assembly, e.g. by adjusting its RTC to the received timestamp. The runtime and/or processing time of the timestamp could be considered and added to the timestamp in order to obtain a more accurate synchronization. The sensor assembly also stores the actual time of two sample points of the recorded video (for example, the first and last frame). If an event is detected in the sensor data, the corresponding time point can be determined based on the stored times of the two sample points.

Alternatively, a wireless signal with a timestamp from a RTC of the camera or of the system to which the camera is connected is transmitted to the sensor assembly via e.g. RFID, NFC, Bluetooth (BT), Bluetooth Low Energy (BTLE), or WLAN. This signal enables the sensor assembly to synchronize with the camera, e.g. by adjusting its RTC to the timestamp. The runtime and/or processing time of the time stamp could be considered and added to the timestamp in order to obtain a more accurate synchronization.

The activity may be a sports activity. Video analyses and summaries are in particular desired for sports activities and may be employed in mass and recreational sports. The method according to the invention is in particular suitable for sports activities, such as soccer, football, rugby, tennis, or basketball.

The activity may be soccer. Soccer is particularly suited for post-match video summaries, as it allows the players to obtain training feedback and to compare their performance with other players. Due to its variety of different movements (kick, shot, long pass, short pass, control, dribbling, corner shot, freekick, etc.) soccer is an activity which is very much suited for the present invention.

The event may be a kick, a short pass, a long pass, a shot, or control of a ball. These types of events are the most relevant ones e.g. in soccer and provide the most useful feedback to the player.

The at least one sensor may be an accelerometer, a gyroscope, or a magnetic field sensor. These types of sensors provide the necessary information as to the movement and orientation of the body or parts of the body. Data provided by these kinds of sensors allow for a reliable detection of events. In particular, a combination of different sensors (e.g. accelerometer and gyroscope) improves the reliability of the method according to the invention. Sensors may be combined by fusing their sensor data and to detect events based on the fused sensor data.

The sensor assembly may comprise two or more sensors and the sensor data from the two or more sensors may be combined into the time-series. In this way, the accuracy of the event detection step can be improved as the data on which the detection is based is more accurate. For example, the data from an accelerometer could be combined with data from a gyroscope to obtain both the acceleration and the orientation of the sensor assembly. A time-series based on acceleration and orientation allows for a more reliable detection of events than a time-series which is either based on acceleration or orientation.

The sensor assembly may also comprise a satellite navigation system module capable of providing data corresponding to the location of the person. The satellite navigation system data may be used to improve the detection of the event. Furthermore, the satellite navigation system data may be used to associate the activity of the person with the corresponding geolocation. For example, a frame of the video containing a certain detected event performed during the activity of the person (e.g. a kick of a soccer player) may be associated with the corresponding geolocation. Also, a video showing certain detected events could be associated with the corresponding geolocation. The satellite navigation system module may be based on GPS, Galileo, Glonass or a combination thereof. The geolocation may be updated only if the user presses a button on the sensor assembly or a certain event is detected in the sensor data, e.g. a kick, pass, trick, etc. to save battery power.

The satellite navigation system data could also be used to generate a heatmap of movements of the person. A heatmap in this context is understood as a map which associates with each location the duration that the person spent at that particular location. The duration is then mapped to a color scheme. For example, a long duration is indicated by the color red, whereas a short location is indicated by the color blue. Intermediate values are indicated by corresponding intermediate colors (e.g. colors from a spectrum of natural colors). The heatmap can be used to analyze where the person actually spent most of the time, e.g. during a match. To this end, the heatmap could be overlaid with a picture or schematic drawing of the playing field (e.g. a football ground, tennis court, basketball field, etc.). In this way, the heatmap shows the preferred position of the person.

The step of detecting an event in the time-series may comprise preprocessing the time-series, segmenting the time-series in a plurality of windows, detecting outliers, extracting a plurality of features from the time-series in each of the plurality of windows, and estimating an event class associated with the plurality of windows based on the plurality of features extracted from the time-series in each of the plurality of windows.

This sequence of steps to detect an event in the time-series is reliable, computationally inexpensive, capable for real-time processing and can be applied to a vast spectrum of activities, in particular sports activities. These advantages are achieved by the particular combination of steps. Thus, by preprocessing the time-series with appropriate filters and signal processing, the data can be prepared optimally for the following method steps. By segmenting the time-series retrieved by the at least one sensor in a plurality of windows, the processing of the data can be focused to a limited amount of data given by the window size. By detecting outliers, undesired windows can be removed. By extracting a plurality of features from the sensor data in each of the windows, the dimension of the problem can be reduced. For example, if each window comprises a few hundred data points, extracting about a dozen of relevant features results in a significant reduction of computational costs. Furthermore, the subsequent step of estimating an event class associated with the plurality of windows needs to operate on the extracted features only, but not on the full set of data points in each window.

Being computationally inexpensive, this sequence of steps is particularly suitable for real-time processing of sensor data. Thus, the method can be implemented in the sensor assembly itself which is for example attached to or integrated in a shoe, article of apparel, wearable device (a computer that is incorporated into items of clothing and accessories which can comfortably be worn on the body), etc. worn by the person, or which is directly coupled to the person, e.g. to his/her skin. For example, the sensor assembly can be placed on the shoe, within the shoe (e.g. upper, midsole, outsole), in the sockliner (insole which can be removable). The device could also be a wearable device. A wearable device is understood as an electronic device which can be worn by a person and which is attached to the person's body either directly or indirectly. A wearable device could for example be a watch, a bracelet, glasses, a hat, clothing, apparel, a strap to be worn at an extremity, etc.

The sensor assembly could be worn at the lower leg, e.g. shin area or ankle. Depending on the kind of sports, the sensor assembly could also be worn near the wrist (for example for sports like tennis or basketball). The sensor assembly can also be integrated in sports equipment which the athlete uses for performing the activities of interest, e.g. in a tennis racket, soccer ball, basketball or skateboard.

The sensor assembly may comprise a central processing unit which is capable to perform the mentioned sequence of steps. To this end, the processing unit could execute corresponding computer readable instructions.

The step of preprocessing may comprise low pass filtering and downsampling. Low pass filtering is applied for noise reduction. Downsampling reduces the amount of data to be processed and allows for a more efficient implementation.

One preprocessing step may include the computation of the signal magnitude vector (SMV) of the accelerometer data. A thresholding procedure may be applied to the SMV in order to determine energy rich regions in the signal. The time-series may be segmented in a plurality of windows with a fixed size e.g. around the energy rich regions mentioned before. For example, the windows may be centered at maximum peaks in the time-series. These windows with a fixed size may be easily implemented and are computationally inexpensive.

Alternatively, the window size may be adapted to the shape and / or extent of the event. Since the length of events may be different, e.g. control versus shot, finding an optimal window size is challenging. Therefore, the window size may be adapted to the shape and / or extent of the event. The windows with a maximum peak at the center below a threshold may be removed. In this way, the method may focus on those windows which are promising candidates for containing a relevant event.

The time-series may also be segmented in a plurality of windows using matching with a template of an event that is defined using known signals of pre-recorded events. The matching may be based on correlation, Matched Filtering, Dynamic Time Warping, or Longest Common Subsequence (LCSS) and its sliding window variant, warping LCSS. The segmented windows may also include undesired movements, e.g. running, walking and tackling. Therefore, an outlier detection procedure may be applied, e.g. Rule based systems or one-class Support Vector Machines. Segmented windows which passes the outlier detection procedure are further processed.

The event class may comprise at least the event to be determined and an outlier class associated with sensor data that does not belong to a specific event. In this way, discrimination can be made between those events which are of interest for the particular activity and all other events.

The features may be based at least on one of temporal, spatio-temporal, spectral, or ensemble statistics by applying, for example, wavelet analysis, Fast Fourier Transform (FFT), or principal component analysis (PCA). The mentioned statistics and transforms are suitable to derive features from the time-series in each of the windows which are as non-redundant as possible and allow for a reliable determination of events.

The features may be based on one of simple mean, normalized signal energy, movement intensity, signal magnitude area, correlation between axes, maximum value in a window, minimum value in a window, maximum detail coefficient of a wavelet transform, correlation with a template, projection onto a principal component of a template, distance to an eigenspace of a template, spectral centroid, bandwidth, or dominant frequency. These kinds of features have been found to allow for a reliable determination of events associated with human motion.

The method may further comprise the step of reducing the number of features by feature selection procedures. Reducing the number of features by focusing on the relevant features reduces computational complexity. For example, the features may be selected based on sequential forward selection.

The event class may be estimated based on a Bayesian Classifier such as Naive Bayes classifier, a maximum margin classifier such as Support Vector Machine, an ensemble learning algorithm such as AdaBoost classifier and a Random Forest classifier, a Nearest Neighbor classifier, a Neural Network classifier, a Rule based classifier, or a Tree based classifier. These methods have been found to provide for a reliable classification of events associated with human activity.

The event class can also be determined by fusing the decisions of several of the above mentioned classifiers (decision level fusion) to obtain a more reliable classification.

The method may further comprise the step of detecting the event by matching of a template using correlation, Matched Filtering, Dynamic Time Warping, or Longest Common Subsequence (LCSS) and its sliding window variant, warping LCSS.

Estimating the event class may comprises discriminating between merged event groups containing events which are similar in shape, and discriminating between single events belonging to one specific group. Thus, the classification of different events is performed in a hierarchical manner. Events may be grouped in instances with similar signal shape, e.g. control and short pass or long pass and shot. Different classification systems may be used in order to first classify groups of events and then further distinguish between single event classes.

The step of estimating may be based on a classifier, which has been trained based on supervised learning. Supervised learning allows adapting the classifier to certain classes of events (e.g. kicks, shots, passes, etc.) and/or to certain types of athletes (e.g. professional, amateur, recreational), or even to a specific person.

Further improvement of the system performance can be reached by online learning. Online learning allows the system to adapt to the user without human interaction. The system is retrained with additional detected events, e.g. in a game.

The method may be performed in real-time. Real-time analysis may be used to predict certain events and to initiate certain measures. For example, sports equipment may be adapted for a kick or hit prior to the impact of e.g. a ball. Real-time analysis is also important to provide real-time feedback to the person. For example, the person may instantly be warned about excess stress or other unhealthy conditions.

The sensor assembly may be attached to a strap to be worn at an extremity of the body of the person. Such an arrangement has the advantage that the movements of the extremity can immediately be measured and certain events such as kicks in soccer can reliably be determined. Furthermore, the gathering of the sensor data is independent of footwear and other equipment, e.g. a soccer player may use whatever shoe and/or shinguard he/she prefers. The strap may be made from textile material, leather, artificial leather, plastics, or the like. A strap is understood as any loop-like arrangement which is capable to be worn at an extremity of a person's body, e.g. arm and/or leg. Another example are wrist-worn wearables for sports such as tennis (for forehand / backhand detection), golf (for full swing, half swing, putt detection), as well as racket and club sports.

The sensor assembly could be permanently attached or integrated to the strap e.g. by gluing, welding or stitching. Alternatively, the sensor assembly could be removably attached to the strap, e.g. by a hook-and-loop fastener, a snap button, or similar.

Furthermore, the sensor assembly can be attached to or integrated in a shoe or article of apparel worn by the person, or which is directly coupled to the person, e.g. to his/her skin. For example, the sensor can be placed on the shoe, within the shoe (e.g. upper, midsole, outsole), in the sockliner (insole which can be removable). The shoe could comprise a cavity into which the sensor assembly is placed. The sensor assembly could also be attached to or integrated into a wearable device like a watch, bracelet, or watch-like device which is able to show the current time. The sensor assembly could be worn at the lower leg, e.g. shin area or ankle.

The sensor assembly can also be integrated in sports equipment which the athlete uses for performing the activities of interest, e.g. in a tennis racket, soccer ball, basketball or skateboard.

The sensor data of different devices on different body positions can be fused in order to increase the accuracy of the system. For example a soccer player may have multiple sensors arranged at his leg (e.g. one at the foot, one at the shin and one at the thigh), and a tennis or golf player may have multiple sensors arranged at his arm (e.g. one at the wrist, and one at the upper arm) and optionally at his leg in addition. The sensor data of these different sensors are then fused, i.e. the event is detected based on combined sensor data, to obtain a better estimate of the kind of motions performed by the player.

Feedback may be provided to the person based on the estimated event. Thus, the person may be informed about e.g. his/her performance during training or a match. Such feedback could be provided in real-time. For example, feedback could be provided on a display of a smartphone (e.g. showing running distance, number of shots, etc.), on a display of a watch, on a display of the sensor assembly, or on an external display arranged e.g. at a sports ground.

Feedback may also be provided not in realtime. For example, feedback could be provided after an activity (e.g. after a match or training) e.g. in a locker room (on a display mounted on a wall or on a person's electronic device like a smartphone, tablet PC, etc.) or at home. To this end, the feedback data could be stored in a database or cloud storage.

Summary statistics may be provided based on the detected event. In this way, the statistics may be tailored to specific classes of events. For example in a soccer application, statistics about the number and intensity of shots, shot speed, time on ball, number of long passes and short passes, duration of dribblings, etc. may be provided. Summary statistics for basketball may comprise the number of puts, passes and dribblings, the time of ball possession, intensity of jumps, etc. Summary statistics for tennis may comprise the number of hits, estimated ball speeds, the percentage of forehand and backhand hits, the number and intensity of services, etc. Those statistics can be provided if the tennis player is equipped with a sensor assembly near his hand. If the tennis player is additionally equipped with a sensor assembly near one or both of his feet, running statistics may also be provided, such as the total distance, number of sprints (e.g. to the net), etc.

The summary statistics may be combined with a video showing detected events of a certain player (e.g. all his shots). In this way, a combined summary or feedback is obtained.

Summary statistics based on the detected event (and optionally a generated video of certain events) could be transferred to other people like a trainer, spectators or other people interested in those statistics. The transfer could be over the internet via a live stream. The transfer could be based on media such as Wifi, WLAN, BT, BTLE, NFC, RFID, USB, Ethernet, Thunderbolt and the like. Based on the summary statistics (and optionally the generated video of certain events), the player could obtain feedback from e.g. a trainer or a scout.

Furthermore, based on the summary statistics (and optionally generated video of certain events) a special area in a store or a stadium could be unlocked, i.e. depending on how well the player performed. For example if the player achieved a certain number of ball contacts during a match, he is awarded access to a certain area in a store or stadium.

The sensor data may also be used to provide a trick counter (i.e. the number of tricks like step overs, around-the-worlds, etc. performed), a football activity monitor, a keepy-uppy tracker (i.e. counting ball contacts while juggling the ball), "around the world" (i.e. holding the ball up with one leg and trying to move the leg around the ball before it hits the ground), or a 1-on-1 counter (i.e. counting how often the player engaged in a one-on-one situation on the field, for example trying to bypass and/or tricking the opponent). For example, the sensor data could be analyzed to determine the number of ball contacts a player had without allowing the ball to hit the ground (keepy uppy). The statistics mentioned above could be determined based on corresponding detected events, i.e. an event could be the contact of a foot with the ball (for keepy-uppy) or a circular movement (for "around the world"). If an event associated with a kick is detected, the speed of a ball may be estimated based on the sensor data. Thus, the person may obtain feedback about his/her kicking performance. The ball speed may be estimated by preprocessing, feature extraction and regression. The sensor data may be segmented and features may be computed for each segmented region. Different regression techniques can be applied, which use the computed features as input as will be described in more detail below.

The method may further comprise obtaining feedback regarding the detected event. For example, the event may be a certain soccer trick performed by a player. The sensor data gathered while the trick was performed may be analyzed to determine, how well the trick was performed. For example, the player may use a smartphone, tablet PC, notebook, smartwatch, etc. showing the player the trick to perform. The player performs the trick and gets a feedback how accurate his movements were. The event corresponding to the trick may be determined as described before.

A system for associating frames in a video of an activity of a person with an event, may be adapted to perform a method as described above.

In addition to the automatic detection of events/actions, the person can determine important scences by himself/herself. Therefore, a movement has to be defined, e.g. by tapping on the sensor assembly. To this end, the sensor assembly may have a button or switch or a touch sensitive area. In order to indicate the desired movement to the sensor assembly, the user may be required to perform a double or triple tapping. Alternatively, sensor assembly may be in communication with a mobile device (e.g. a smartphone, tablet PC, etc.) and the person may indicate the desired movement to the sensor assembly via the mobile device. For example, the mobile device may show buttons denoted "go" and "stop" on its display which the user presses to indicate the beginning and end of a certain event (e.g. a trick that he performs). It is also possible that a certain force needs to be exerted on a touch sensitive area or that a certain gesture is performed thereon.

The sensor data of the specific movement can be used to train a classification system including e.g. Hidden Markov Model or one-class Support Vector Machine. The trained system can be integrated into the above described algorithmic pipeline.

A further aspect of the present invention relates to a system for associating frames in a video of an activity of a person with an event, comprising: (a.) at least one camera for recording a video of an activity of a person; (b.) a sensor assembly comprising at least one sensor being capable to be coupled to a person while the person is performing the activity; (c.) memory for storing a time-series of sensor data obtained from the sensor; and (d.) a processor for synchronizing the video with the sensor data, for detecting an event in the time-series, and for associating the event with at least one corresponding frame in the video showing the event.

The sensor assembly may be adapted to be coupled to the body of the person. This allows for a direct and immediate transmission of forces from the body to the sensor improving the accuracy of the measured data.

The sensor assembly may be adapted to be attached to a shoe. Such an arrangement has the advantage that the movements of the shoe can immediately be measured and certain events such as kicks can reliably be determined. The shoe may for example be a soccer, rugby or football shoe.

The sensor assembly may be adapted to be attached to a shin guard. With such an arrangement, certain events such as kicks can reliably be determined, while the device is independent of the shoes worn by the person.

Furthermore, the sensor assembly can be attached to integrated in a shoe or article of apparel worn by the person, or which is directly coupled to the person, e.g. to his/her skin. For example, the sensor can be placed on the shoe, within the shoe (e.g. upper, midsole, outsole), in the sockliner (insole which can be removable). The shoe could comprise a cavity into which the sensor assembly is placed. The sensor assembly could also be attached to or integrated into a wearable device like a watch, bracelet, or watch-like device which is able to show the current time. The sensor assembly could be worn at the lower leg, e.g. shin area or ankle.

The sensor assembly can also be integrated in sports equipment which the athlete uses for performing the activities of interest, e.g. in a tennis racket, soccer ball, basketball or skateboard.

The system may further comprise a wearable device comprising the sensor and the memory. Wearable devices allow for an iconic look and may be worn in an urban context too.

The system may further comprise a wireless module associated with the sensor. The wireless module may be a RFID, NFC, BT, BTLE, Wifi or WLAN module. For example the sensor assembly, the memory, and the wireless module could be attached to or integrated in a wearable device and the wireless module could be used to sense other wearable devices nearby. Furthermore, sports relevant areas such as football grounds or stadiums could be equipped with wireless beacons or RFID/NFC tags and get recognized by the wearable device. In response, the wearable device could perform an action such as synchronizing the sensor with a camera (e.g. installed in the football ground or stadium).

Synchronizing the sensor data with the video may comprise receiving a wireless signal from the wireless module. For example, when the person wearing the wearable device enters a sports ground, a corresponding wireless receiver module installed at the sports ground receives the wireless signal from the wireless module contained in the wearable device and synchronizes the camera with the sensor. The wireless signal may comprise a timestamp of a real time clock (RTC) contained in the sensor assembly or wireless device. This timestamp enables the camera to synchronize with the RTC of the sensor assembly or wearable device, e.g. by adjusting its RTC to the received timestamp. The runtime and/or processing time of the timestamp could be considered and added to the timestamp in order to obtain a more accurate synchronization. The sensor assembly or the wearable device also stores the actual time of two sample points of the recorded video (for example, the first and last frame). If an event is detected in the sensor data, the corresponding time point can be determined based on the stored times of the two sample points.

Alternatively, a wireless signal with a timestamp from a RTC of the camera or of the system to which the camera is connected is transmitted to the wearable device via e.g. RFID, NFC, Bluetooth (BT), Bluetooth Low Energy (BTLE), or WLAN. This signal enables the sensor assembly or wearable device to synchronize with the camera, e.g. by adjusting its RTC to the timestamp. The runtime and/or processing time of the time stamp could be considered and added to the timestamp in order to obtain a more accurate synchronization.

The sensor assembly may comprise a memory. For example, the sensor assembly and the memory may be contained in a common housing. Thus, a compact device is obtained which may be easily attached to e.g. clothing, a strap, a shoe, etc.

A still further aspect of the present invention relates to a computer program comprising instructions which cause a computer to perform a method as described before, when executed.

IV. Description of the figures

In the following, exemplary embodiments of the invention are described with reference to the figures in which

Fig. 1       shows a schematic illustration of an exemplary embodiment of the present invention;

Fig. 2       shows a schematic illustration of the usage of multiple cameras in the context of the present invention;

Fig. 3       shows a schematic illustration of a sensor assembly according to the present invention;

Fig. 4    shows an example of a sensor assembly attached to a strap;

Fig. 5    illustrates how a video generated according to the invention is distributed to consumer devices;

Fig. 6    illustrates how a video generated according to the invention may be present to a user;

Fig. 7    shows an exemplary presentation on a mobile device of a video generated according to the invention;

Fig. 8    shows an exemplary sequence of steps to detect an event from a time-series of sensor data according to the present invention;

Fig. 9    shows a plot of an exemplary time-series obtained from a 3-axis accelerometer;

Fig. 10    shows a plot of the signal magnitude vector computed from the 3-axis accelerometer shown in Fig. 9;

Fig. 11    shows an illustration of a Support Vector Machine; and

Fig. 12    shows an exemplary two-step event classification using event goups.

V. Description of preferred embodiments

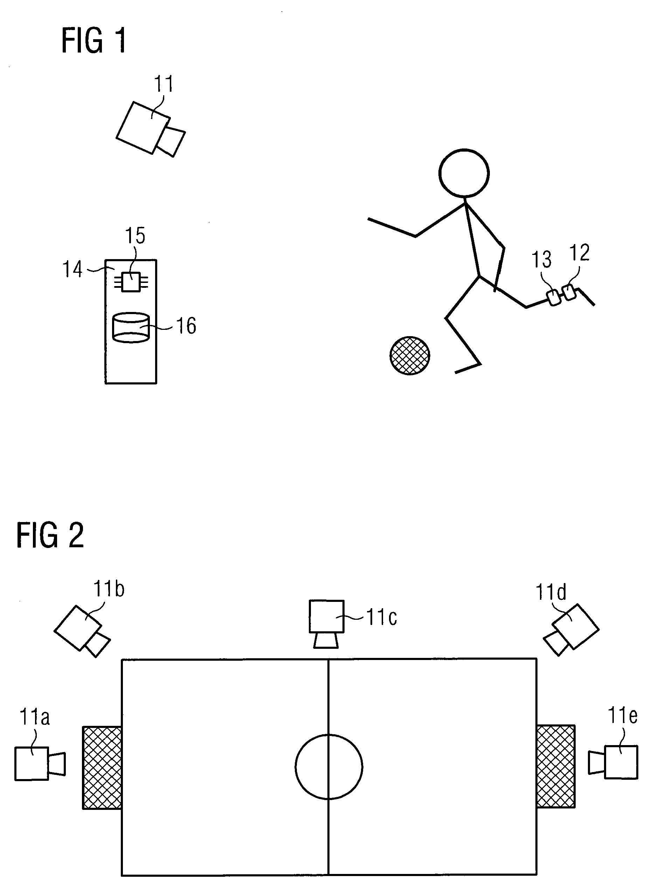

An exemplary method and system according to the invention is explained with reference to the schematic illustration of Fig. 1. The method according to the invention comprises the step of (a.) recording a video of an activity of a person. As shown in Fig. 1, the video can be recorded with a camera 11. The camera 11 can be the camera of a smartphone, a tablet PC, a webcam, a video camera, an action camera, or a camera dedicated for recording sports activities. In general, any camera which is able to record a sequence of frames is suitable. The camera 11 can be fixed at e.g. a stadium or a sports ground. Alternatively, the camera 11 may be part of a temporary installation or may even be held by a person. In any case, the camera 11 is arranged so as to record the activity of the person.

Instead of a single camera 11, multiple cameras can be used which capture the scene from different angles as illustrated in Fig. 2. In this example, five cameras 11a, 11b, 11c, 11d and 11e are arranged around a playing field which in this example is a soccer field, but could in general be any place which is suitable to perform a sports activity, e.g. a basketball field, a tennis court, or even a street. In the example of Fig. 2 cameras 11a and 11e are positioned behind the goals. Therefore, these cameras are especially suitable to capture shots on the goal and goal keeper actions. Cameras 11b and 11d are positioned near the corner flags and deliver a diagonal view of the playing field. Furthermore, they can capture corner shots very well. Camera 11c is positioned on the projection of the center line. Therefore, this camera captures activities in the middle of the field, such as the kickoff.

Each of the cameras captures its own video stream, i.e. in the example of Fig. 2, five video streams are generated. The video streams may either be stored at the respective camera or may be transferred to a central storage unit for later processing as will be described below. Transfer of the video streams may either be via a wired connection (e.g. a video cable) or wirelessly (e.g. via WLAN, Bluetooth, etc.).

In general, the number and position of cameras may be different from the example shown in Fig. 2 and may depend on the sports activity. For example, a golf course may be equipped with a much higher number of cameras. In any case, multiple cameras help to capture the scene from different angles and can also capture activities which could be hidden by foreground players if only a single camera would be used. Nevertheless, the present invention can be practiced with only a single camera.

The activity may be a sports activity, such as a soccer, basketball or tennis match. In general, the present invention is applicable to any kind of sports. Furthermore, the present invention can be used in training situations, in a match, spare time activities and the like.

The method further comprises the step of (b.) storing a time-series of sensor data obtained from a sensor assembly 12 comprising at least one sensor coupled to the person while the person is performing the activity. As shown in Fig. 1, the person is wearing a sensor assembly 12 at his ankle. The sensor assembly 12 may comprise a single sensor such as an accelerometer, a gyroscope, or a magnetic field sensor, or may comprise multiple sensors, i.e. a combination of the aforementioned sensors. In general, the at least one sensor is capable of measuring the movement of the person, i.e. is sensitive to changes of the kinematical state of the body, or parts of the body, of the person. These changes may be changes in movement, i.e. an acceleration or deceleration, or changes in orientation, i.e. a rotation. The sensor generates an electrical signal which corresponds to those changes of the kinematical state. In general, a voltage, a current, or both is/are varied according to the movements.

The at least one sensor of the sensor assembly 12 can be sensitive in several dimensions. For example, an accelerometer may be sensitive in all three spatial dimensions, i.e. axes. A gyroscope may be sensitive to rotations around three spatial dimensions, i.e. axes. A magnetometer may sense deviations of a magnetic field (e.g. the earth's magnetic field). These deviations may be used to determine the orientation and rotation relative to the magnetic field similar to a compass.

The electrical signal emitted by the at least one sensor may be sampled by an analog-to-digital (AD-) converter at a certain sampling rate, e.g. between 100 and 10000 Hz, preferably at about 1000 Hz. The analog electrical signal is represented by a series of discrete values. For example, if the resolution of the AD-converter is 10 bits, the electrical signal at each sampling point is represented by $2^{10}=1024$ possible values. In this way a time-series of sensor data of the at least one sensor of the sensor assembly 12 coupled to the person is obtained.

In the exemplary embodiment of Fig. 1 the sensor assembly 12 is coupled to the ankle of the person. However, it is in general possible that the sensor assembly 12 is coupled to different parts of the body, e.g. the wrist, chest, head, shin, etc. Furthermore, the sensor assembly 12 may be attached to or integrated in a shoe, article of apparel, wearable device, etc. worn by the person, or may be directly coupled to the person, e.g. to his/her skin. For example, the sensor assembly 12 can be placed on a shoe, within a shoe (e.g. upper, midsole, outsole), in a sockliner (insole which can be removable). The shoe could comprise a cavity into which the sensor assembly 12 is placed. The sensor assembly 12 could also be attached to or integrated into a device, such as a wearable device like a strap, watch, bracelet, watch-like device. The sensor assembly 12 could be worn at the lower leg, e.g. shin area or ankle. The sensor assembly 12 can also be integrated in sports equipment which the athlete uses for performing the activities of interest, e.g. in a tennis racket, soccer ball, basketball, or skateboard.

If the at least one sensor is sensitive to movements and/or rotations and/or orientation in one dimension (or axis), the time-series is an ordered sequence of single sensor data values observed at consecutive sampling points in time. If the at least one sensor is sensitive to movements and/or rotations in more than one dimension (or axes), or if more than one sensor is used, the time-series is an ordered sequence of sensor data vectors observed at consecutive sampling points in time.

The sensor assembly 12 may also be or comprise a satellite navigation system module capable of providing data corresponding to the location of the person. The satellite navigation system module may be based on GPS, Galileo, Glonass or a combination thereof. The geolocation may be updated only if the user presses a button or at predefined time intervals (e.g. every 60 seconds, 5 minutes, 10 minutes, etc.) to save battery power. In case of a time interval, the user may set the time interval, e.g. via a switch, button or touch-sensitive display on the sensor assembly 12, or via a smartphone, tablet PC, computer, etc. In the latter case, the time interval could be transmitted to the sensor assembly 12 via a wired connection (e.g. USB, Ethernet, Thunderbolt, etc.) or a wireless connection (e.g. Wifi, WLAN, BT, BTLE, NFC, RFID, ANT ®, ANT+, ZigBee ®, etc.). Alternatively, the satellite navigation system module is arranged separately from the sensor module 12, e.g. in a smartphone, wrist watch, etc. worn by the person. In the latter case, the geolocation could be transmitted to the sensor assembly 12 via a wired connection (e.g. thin cable) or a wireless connection (e.g. Wifi, WLAN, BT, BTLE, NFC, RFID, ANT ®, ANT+, ZigBee ®, etc.).

As shown in the exemplary embodiment of Fig. 1, the time-series is stored in a memory 13 for later processing. For example, the time-series may be retrieved after the activity has finished by reading the stored time-series of sensor data from the memory 13. Reading may be performed wirelessly, e.g. via Wifi, WLAN, Bluetooth (BT), Bluetooth Low Energy (BTLE), ANT ®, ANT+, ZigBee ®, or the like, or via a wired connection, e.g. USB, lightning adapter, RJ-45, or similar.

The data may be transmitted from the at least one sensor to the memory 13 wirelessly (e.g. via Wifi, WLAN, Bluetooth (BT), Bluetooth Low Energy (BTLE), ANT ®, ANT+, ZigBee ®, or the like) or via a wired electrical connection (e.g. USB, lightning adapter, RJ-45, or similar). While the memory 13 is arranged in the exemplary embodiment of Fig. 1 at the leg of the person, it is also possible that the memory 13 is not connected in any way to the person, but is arranged separately, e.g. in a dedicated housing. In this case, the sensor data are transmitted from the at least one sensor to the memory 13 via a wireless connection.

Furthermore, the memory 13 may be attached to or integrated together with the sensor assembly 12 in a shoe, article of apparel, wearable device, etc. worn by the person. For example, the memory can be placed on a shoe, within a shoe (e.g. upper, midsole, outsole), in a sockliner (insole which can be removable). The shoe could comprise a cavity into which the memory 13 is placed. The memory 13 could also be attached to or integrated together with the sensor assembly 12 in a device such as a wearable device like a strap or watch, bracelet, watch-like device, etc. The memory 13 could be worn at the lower leg, e.g. shin area or ankle. The memory 13 can also be integrated in sports equipment which the athlete uses for performing the activities of interest, e.g. in a tennis racket, soccer ball, basketball, or skateboard.

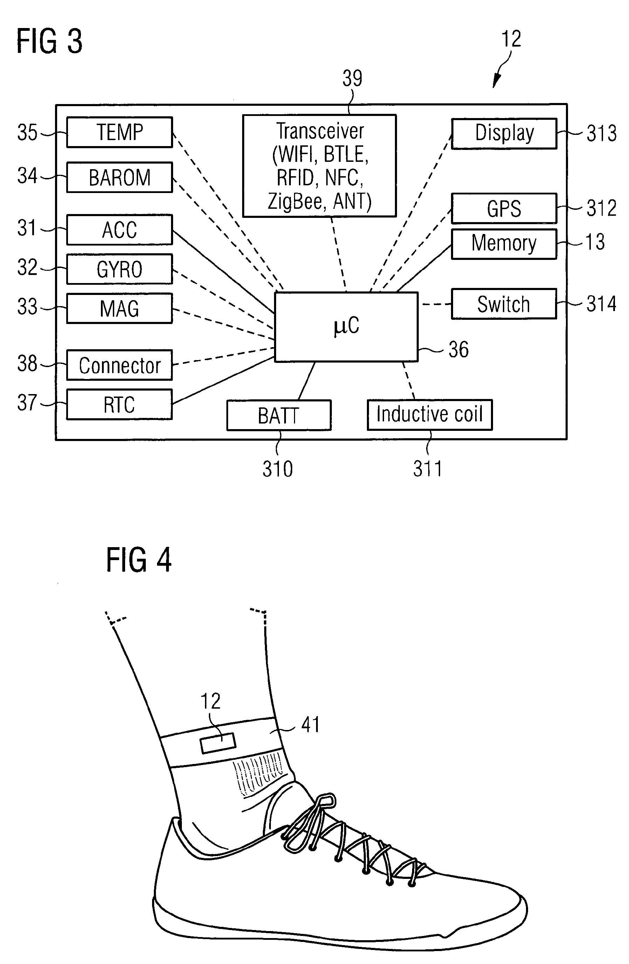

As is shown in the exemplary embodiment of Fig. 3, the memory 13 can be arranged in the sensor assembly 12 and, thus, is part of the sensor assembly 12. Fig. 3 shows a schematic illustration of a sensor assembly 12 and its components, some of which are optional. In any case, the sensor assembly 12 comprises at least one sensor. As shown in Fig. 3, this sensor may be an accelerometer 31. An accelerometer measures acceleration and deceleration and outputs corresponding electrical signals. It is also possible that the sensor assembly 12 comprises more than one accelerometer.

In that case, the sensor data from the accelerometers can be combined in a single time-series.

Instead of an accelerometer 31, the sensor assembly may comprise a gyroscope 32. A gyroscope measures changes in the orientation, i.e. rotations, and outputs corresponding electrical signals. It is also possible that the sensor assembly 12 comprises more than one gyroscope. In that case, the data from the gyroscopes may be combined in a single time-series. It is also possible that the sensor assembly 12 comprises two or more sensors of a different type, for example the accelerometer 31 and the gyroscope 32. In this case, the sensor data of both sensors 31 and 32 may be combined into a single time-series.

The sensor assembly may comprise additionally or alternatively to the accelerometer 31 and/or the gyroscope 32, a magnetometer 33. A magnetometer measures deviations of a magnetic field (e.g. the earth's magnetic field). These deviations may be used to determine the orientation and rotation relative to the magnetic field similar to a compass. The magnetometer 33 outputs electrical signals corresponding to the orientation.

The sensor assembly 12 may optionally comprise a barometer 34 which measures air pressure and outputs a corresponding electrical signal. The barometer 34 may be used to determine the altitude. The altitude may be stored in the memory 13 together with the data from the other sensors 31, 32, 33 and provided as further statistical information to the wearer as will be described below. Alternatively or additionally, if the sensor assembly 12 comprises additionally a satellite navigation module as will be described below, data from the barometer 34 may be used to improve the accuracy of the geolocation data obtained from the satellite navigation module.

The sensor assembly 12 may optionally comprise a temperature sensor 35 which measures the temperature and outputs a corresponding electrical signal. The measured temperature may be used to improve the accuracy of the barometer 34, as the temperature may influence the readings from the barometer. Alternatively or additionally, the measured temperature may be provided as further statistical information to the wearer as will be described below.

Data from the at least on sensor 31,32,33,34, 35 is provided to a central processing unit 36 which may be a microprocessor, microcontroller, application-specific integrated circuit (ASIC), field-programmable gate array (FPGA) or similar unit with processing capabilities. The central processing unit 36 may comprise an analog-to-digital converter (ADC) which converts the electrical signals obtained from the sensors 31, 32, 33, 34, 35 to digital signals which may be processed by corresponding software executed on the central processing unit 36 or programmable logic blocks in case of an FPGA. Alternatively, the ADC may be provided in the sensor assembly 12 as a separate component.

As mentioned before, in the exemplary illustration of Fig. 3 the sensor assembly 12 also comprises the memory 13. However, it is also possible that the memory 13 is not part of the sensor assembly 12, but is a separate component connected to the sensor assembly 12 wirelessly (e.g. via Wifi, WLAN, Bluetooth (BT), Bluetooth Low Energy (BTLE), ANT ®, ANT+, ZigBee ®, or the like) or via an electrical wire (e.g. USB, lightning adapter, RJ-45, or similar).

The memory 13 is coupled to the central processing unit shown in Fig. 3. Thus, the central processing unit 36 may store the data received from the sensors 31, 32, 33, 34, 35 in the memory 13. Optionally, the central processing unit may process the sensor data before storing in the memory 13. For example, the central processing unit 36 may perform a preprocessing and filter high frequency components from the data which are due to noise or low frequency components which are due to a certain bias of the sensors 31, 32, 33, 34, 35. The central processing unit 36 may also combine the data from two or more sensors 31, 32, 33, 34, 35 into a single time-series for storing in the memory 13.

Furthermore, the central processing unit 36 may provide the received sensor data with a time stamp. To this end, the sensor assembly 12 may comprise a real time clock (RTC) 37 connected to the central processing unit 36. The real time clock 37 generates a timing signal which corresponds to the actual time. The real time clock 37 may also be used to synchronize the sensor assembly 12 (and thus the time-series stored in the memory 13) with the camera 11 or cameras 11a, 11b, 11c, 11d, 11e as will be described below.

The sensor assembly 12 may further comprise a connector 38 which is an optional component. The connector may be use to connect the sensor assembly 12 to a computer, tablet PC, smartphone, etc. in order to transfer the sensor data stored in the memory 13 for processing according to the present invention. The connector may be a USB, lightning, RJ-45 plug, or similar. The connector 37 may also be used to charge the sensor assembly 12 with electrical power.

The sensor assembly 12 may further comprise a wireless transceiver 39 which may be used transmit the sensor data stored in the memory 13 to a computer, tablet PC, smartphone, etc. Alternatively or additionally, the wireless transceiver 39 may be used for synchronizing the sensor assembly 12 with the camera 11 or cameras 11a, 11b, 11c, 11d, 11e as will be described below. The wireless transceiver may be a Wifi, WLAN, Bluetooth (BT), Bluetooth Low Energy (BTLE), ANT ®, ANT+, ZigBee ® transceiver, or the like.

Furthermore, the wireless transceiver 39 could be used to sense similar devices around. Certain areas (e.g. "soccer hotspots", a stadium, football or soccer pitch, etc.) may be equipped with e.g. RFID/NFC tags or Bluetooth beacons and get recognized by the sensor assembly 12. Thus, an identifier associated with the area may be stored by sensor assembly 12 together with the data from the accelerometer 31 and/or the gyroscope 32 and/or the magnetometer 33 to associate the measured data with the area or simply to register that the person wearing the sensor assembly 12 has visited a certain location, e.g. a stadium or store. Instead of a transceiver 39, the sensor assembly 12 may be equipped with a transmitter and/or a receiver as separate components.

The sensor assembly 12 may comprise a battery 310 which provides electrical power to the electronic components of the sensor assembly, i.e. the sensors 31, 32, 33, 34, 35, the real time clock 37, the transceiver 39 and further optional components which will be described below. The battery 310 may be an exchangeable battery, a rechargeable battery which may be exchangeable or permanently fixed in the sensor assembly 12, a capacitor, or similar. In the case of a rechargeable power source (e.g. a rechargeable battery or a capacitor), the battery 310 may be charged via the connector 38. Alternatively or additionally, the sensor assembly 12 may comprise an inductive coil 311 which provides a charging current to the battery 310. To this end, the sensor assembly 12 may be placed near a corresponding transmitter coil which transfers energy to the inductive coil 311 via a time varying electromagnetic field.

As already mentioned, the sensor assembly 12 may comprise a satellite navigation module 312. This module receives electromagnetic signals from satellites in the earth's orbit and may deduce the location of the sensor assembly 12 on the earth's surface (geolocation) from these signals. Additionally, the satellite navigation module 312 may deduce the altitude of the sensor assembly 12. The satellite navigation module 312 may be based on the Global Positioning System (GPS), the Glonass system, or the European Galileo system or a combination of these systems.

The sensor assembly 12 may optionally comprise a display 313. The display may indicate information to the user, such as remaining battery power, time, remaining storage capacity in the memory 13, the status "on/off", etc. The display may also provide feedback to the user based on the sensor data obtained from the sensors 31, 32, 33, 34, 35 as will be described in more detail below.

The sensor assembly 12 may optionally comprise a switch 314. The switch may be a pushbutton which after pushing it returns in its previous state. Alternatively, the switch may be slide switch which may slide between two or more positions. The switch 314 may for example be used to activate the sensor assembly 12 or to manipulate certain settings of the sensor assembly 12. For example, the user may set the current time or set a certain mode of operation. Another use for the switch 314 is updating the geolocation of the sensor assembly 314 by means of the satellite navigation system module 312 if the user activates the switch 314.

The method according to the invention further comprises the step of (c.) synchronizing the video with the sensor data. Synchronizing may be performed by associating a data point in the time-series, e.g. a window, with a corresponding frame in the video. For example, the data point and the corresponding video frame could be associated with the same time stamp. To this end a wireless signal can be transmitted by the transceiver 39 in the sensor assembly 12 for example via RFID, NFC, Bluetooth (BT), Bluetooth Low Energy (BTLE), or WLAN. For example, when the person enters a sports ground, a corresponding receiver module installed at the sports ground (e.g. in a mat or gate) receives the wireless signal from the transceiver 39 and synchronizes the camera 11 or the cameras 11a, 11b, 11c, 11d and 11e with the sensor assembly 12.

The wireless signal may comprise a timestamp of the real time clock (RTC) 37 contained in the sensor assembly 12. This timestamp enables the camera 11 or the cameras 11a, 11b, 11c, 11d and 11e to synchronize with the RTC 37 of the sensor assembly 12, e.g. by adjusting its own RTC to the received timestamp. The runtime and/or processing time of the timestamp could be considered and added to the timestamp in order to obtain a more accurate synchronization. The sensor assembly 12 may also store the actual time of two sample points of the recorded video (for example, the first and last frame). If an event is detected in the sensor data, the corresponding time point can be determined based on the stored times of the two sample points.

Alternatively, a wireless signal with a timestamp from a RTC of the camera 11, the cameras 11a, 11b, 11c, 11d and 11e or of the system to which the camera 11 or cameras 11a, 11b, 11c, 11d and 11e are connected is transmitted to the sensor assembly 12 via e.g. RFID, NFC, Bluetooth (BT), Bluetooth Low Energy (BTLE), or WLAN. The signal may e.g. be transmitted by a gate or mat installed at a stadium, sports ground, etc. The signal may be received by the transceiver 39 and processed by the central processing unit 36. This signal enables the sensor assembly 12 to synchronize with the camera 11 or cameras 11a, 11b, 11c, 11d and 11e, e.g. by adjusting its RTC 37 to the timestamp. The runtime and/or processing time of the time stamp could be considered and added to the timestamp in order to obtain a more accurate synchronization.

Alternatively, the sensor assembly 12 and the camera 11 or cameras 11a, 11b, 11c, 11d and 11e may be synchronized by determining a synchronization event in the time-series and in at least one frame in the video. For example, a player wearing the sensor assembly 12 may perform a certain predetermined movement such as clapping his shoes or clapping the sensor assembly 12. Such an event may rather easily be detected in the video and in the time-series of the sensor data as it produces high peaks in the sensor data. The detected data points in the time-series and the detected frames in the video may then obtain the same time-stamp to synchronize the video with the time-series.

The method comprises the step of (d.) detecting an event in the time-series. An event is defined as a part of a human activity that has a short and restricted duration. For example, an event could be a soccer shot or pass, a hit of a tennis ball or a golf swing. The event can be detected in the time-series by suitable methods as will be described below.

Finally, the method comprises the step of (e.) associating the event with at least one corresponding frame in the video showing the event. Based on the synchronization of the sensor data and the video, the frames corresponding to a detected event can be identified in the video.

Generally, the recorded video and the sensor data stored in the memory 13 may be transferred to a device 14 which is suitable to perform the relevant method steps, i.e. the detection of events and associating detected events with corresponding video frames. Such a device 14 may be a smartphone, a table, a PC, a server, or a dedicated computing device. The video may be transferred to the device 14 wirelessly, e.g. via WLAN, Bluetooth, Bluetooth Low Energy or the like, or via a wired connection, e.g. USB, Firewire, Thunderbolt, or similar. The video and/or the sensor data may be transmitted to the device 14 during the activity, e.g. via wireless connections, or after the activity has finished. In the latter case, wired connections (such as USB) could be used instead of wireless connections.

The device 14 may comprise a processor 15 which is able to synchronize the video with the sensor data, to detect an event in the time-series, and to associate the event with at least one corresponding frame in the video showing the event. To this end, computer executable instructions may be loaded into the processor 15, e.g. from a memory 16 (such as a hard drive, solid state drive, flash memory etc.) to cause the processor 15 to perform the relevant method steps. The memory 16 could also be used to store video and / or the sensor data for later processing by the processor 15 according to the described method.

Fig. 4 shows an exemplary embodiment of a wearable device 41 in the form of a strap 41 comprising a sensor assembly 12. The sensor assembly 12 could be a sensor assembly 12 as described with reference to Fig. 3. For example, the sensor assembly 12 could also contain the memory 13 for storing the sensor data. The sensor assembly 12 may be removably attached to the strap 41 for example by a hook-and-loop fastener, a snap button, a magnetic fastener etc. Alternatively, the sensor assembly 12 may be permanently attached to the strap 14, e.g. by gluing, welding or stitching. The strap 41 has the advantage of being independent of footwear, i.e. can even be used without shoes (e.g. on sand or on a lawn).

The strap 41 may be made from textile material, leather, artificial leather, plastics, or the like. A strap is understood as any loop-like arrangement which is capable to be worn at an extremity of a person's body, e.g. arm and/or leg. Thus, the strap 41 may be worn at a leg, e.g. near the ankle. The accuracy of the method of the invention can be improved if a strap with a further sensor assembly 12 is worn at the other leg. This may in particular be advantageous for a soccer application, because soccer players usually handle the ball with both feet. The sensor data from both sensor assemblies 12 may be combined into a single time-series. To this end, one sensor assembly 12 could transmit its sensor data to the other sensor assembly, for example wirelessly by using the transceiver module 39. The sensor data may be combined by the central processing unit 36 in the receiving sensor assembly 12. Alternatively, both sensor assemblies transmit the sensor data to the device 14 e.g. via the wireless transceiver module 39 or the connector 38 as described above. The sensor data from both sensor assemblies could then be combined in the device 14.

It may be advantageous to wear more than one sensor assembly during other sports activities as well. For example a tennis player may wear a first sensor assembly 12 at his arm, e.g. at the wrist, and a second sensor assembly 12 at one of his legs, e.g. near the ankle. The first sensor assembly 12 may record sensor data which are representative for his arm movements and ball hits, whereas the second sensor assembly 12 records sensor data which is representative for his movements on the tennis court. The sensor data from both sensor assemblies may be combined as described above. Thus, the sensor data recorded by both sensor assemblies represents a more complete recording of his tennis activity.

As already mentioned, the sensor assembly 12 may be equipped additionally with a satellite navigation module 312 to track the location of the user or to measure data which is relevant for detecting certain events. Thus, waypoints maybe used with the present invention or may be stored by the memory 13 together with the data from the accelerometer, and/or the gyroscope and/or the magnetometer to associate the measured data with a geolocation. The usage of waypoints may depend on the user activating the switch 314 as described above.

The method according to the invention may further comprise the step of using the at least one frame to generate a second video showing predetermined events of the activity of the person. All frames associated with corresponding detected events can thus be compiled into a video. The video provides feedback or a summary to the player and can be considered as a "highlight reel" or "show reel" of his performance.

"Highlight reel" or "show reel" in the context of the present invention is understood as a collection of video sequences which share a common property. One common property could for example be that all video sequences of the highlight reel show kicks and/or passes and/or tricks, etc. of a certain player. Another highlight reel could show all defensive events of a goal keeper. Furthermore, a highlight reel could show specific tricks that a player made, for example keepy-uppy or around-the-world. The property does not necessarily relate to a certain player. It could also be possible, for example, that the highlight reel shows all shots made in a match above a certain ball speed (e.g. 50, 60, 80, 100 km/h) independent of the player.

The summary video may be generated on the device 14 and may be uploaded to servers on the internet or directly to consumer devices such as smartphones, tablet computers, PCs, smart watches and the like.

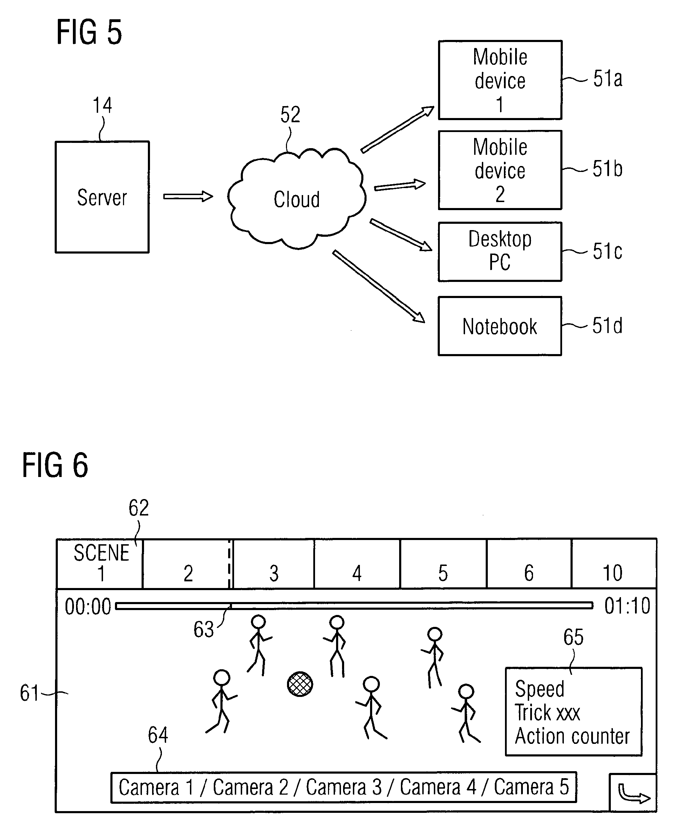

Fig. 5 shows an exemplary embodiment of how the video may be transferred from the device 14 to consumer devices 51a, 51b, 51c, 51d. First, the video and/or additional summary statistics may be transferred from the device 14 to a cloud 52. Accordingly, the device 14 is also connected to the Internet, e.g. via a wired connection (e.g. Ethernet, USB, Thunderbolt, etc.) or a wireless connection (e.g. Wifi, WLAN, BT, etc.). The cloud 52 may be implemented by a single server or a server farm connected to the Internet. "Cloud" in the context of the present invention is understood as any server which is capable of storing the video and/or summary statistics and providing the same to consumer devices.

The video and/or summary statistics may be accessed on the cloud 52 by the devices 51a, 51b, 51c, 51d. For example, devices 51a and 51b are mobile devices such as smartphones, tablet PCs, smart watches and the like. The devices 51a and 51b are connected to the Internet via a wireless connection such as 3G, 4G, UMTS, LTE, Wifi, WLAN, BT, BTLE, etc. For downloading and presenting the video and/or summary statistics from the cloud 52, an application (often denoted as "app" in the context of mobile devices) may be installed on the mobile devices 51a and 51b. Such apps may be downloaded from a virtual store (such as Apple iTunes ®, google play ®, etc.). The app connects to the cloud 52 and downloads the video and/or summary statistics from the cloud 52. Alternatively, the video may be streamed from the cloud 52 to the mobile device without downloading (i.e. without storing the video on the mobile device). Then, the video and/or summary statistics may be presented to the user as will be described in more detail below.

Instead of an app, an Internet browser installed on the mobile devices 51a, 51b may be used as well for connecting to the cloud 52. To this end, the user directs the browser to a certain web page and e.g. enters a username and password. After the user has been granted access, he may either directly view the video and/or summary statistics in the browser or he may download the video and/or summary statistics for later viewing.

The video and/or summary statistics may also be accessed from a desktop PC 51c and/or a notebook 51d. To this end, a software application for accessing the cloud 52 and for downloading and presenting the video and/or summary statistics may be installed on the desktop PC 51c and/or notebook 51d. Alternatively, the video may be streamed from the cloud 52 to the device without downloading (i.e. without storing the video on the device). The desktop PC 51c and the notebook 51d may be connected to the Internet via a wireless connection such as 3G, UMTS, LTE, Wifi, WLAN, BT, etc. or a wired connection such as Ethernet, USB, Thunderbolt, etc.

Instead of a software application, an Internet browser installed on the desktop PC 51c and/or notebook 51d may be used as well for connecting to the cloud 52. To this end, the user directs the browser to a certain web page and e.g. enters a username and password. After the user has been granted access, he may either directly view the video and/or summary statistics in the browser or he may download the video and/or summary statistics for later viewing.

As an alternative to the exemplary embodiment of Fig. 5, the devices 51a, 51b, 51c and 51d may directly connect to the device 14 to download the video and/or the summary statistics. The connection may be established via a wireless connection such as Wifi, WLAN, BT, BTLE, etc. or a wired connection such as Ethernet, USB, Thunderbolt, etc. For example, the device 14 may be installed at a stadium or sports ground. After the person wearing the sensor assembly 12 has performed a sports activity, the sensor data stored in the memory 13 is transferred to the device 14 as described above and processed on the device 14 to produce a summary video (a "highlight reel" or "show reel") and optionally additional summary statistics. Then, the person may use e.g. his smartphone, tablet PC, smartwatch or the like to connect to the device 14 to download the video and optionally the summary statistics. Alternatively, the video is streamed from the device 14 to the devices 51a, 51b, 51c and 51d without downloading (i.e. without storing the video on the devices 51a, 51b, 51c and 51d).

The video and/ summary statistics may also be shared on social media platforms (such as youtube, Instagram, vine, twitter, facebook, etc.). For example, the cloud 52 could be part of such a social media platform. Alternatively, the video and/or summary statistics is transferred from the device 14 or from the cloud 52 to a server of a social media platform. For example, once a summary video and/or summary statistics has been generated on the device 14, the video and/or summary statistics is automatically added to a person's social media profile. Other persons to which the person is connected via the social media platform may then have access to the video and/or summary statistics and may e.g. post comments or share the video and/or summary statistics with other persons.

Fig. 6 illustrates how the video and/or summary statistics can be presented to a user of a mobile device 51a, 51b (such as a smartphone, tablet PC, smartwatch, etc.), a desktop PC 51c, notebook 51d, or in general any device comprising a display 61. The video is presented to the user on a display 61 of the device 51a, 51b, 51c, 51d. The user may have several possibilities to influence how the video is presented. For example, on the top of the display 61, just above the video, a scene selection bar 62 is shown. The user may switch between different scenes of the video which correspond to different events which he performed during his activity. For example, the first scene shows the user performing a kickoff. The second, third and fourth scene may show the user making passes. The fifth and sixths scene may show the user performing shots to the goal and so on. The user may select each of these scenes by tapping or clicking one of the corresponding buttons in the scene selection bar 62. The number of scenes may differ from the example shown in Fig. 6. Also, the position of the scene selection bar 62 may be different, for example on the bottom of the display 61 or on the sides. Furthermore, the display 61 may show no scene selection bar 62 at all.

Below the scene selection bar 62 is a time slider 63. This slider 63 runs along a predefined path, wherein the beginning of the path corresponds to the beginning of the video and the end of the path corresponds to the end of the video. Thus, in the example of Fig. 6, the path begins at o seconds and ends at 1 minute and 10 seconds. The position of the slider 63 on the path corresponds to the current position of the video. For example, if the slider 63 reaches the middle of the path, half of the video is over and the other half is about to start. The user may tap or click and hold the slider 63 to slide it to an arbitrary point between the beginning and the end of the video to show the video from the respective point in time. The position of the slider 63 may be different, for example on the bottom of the display 61 or on the sides. Furthermore, the display 61 may show no slider 63 at all.

At the bottom of display 61 a camera selection bar 64 is shown. The camera selection bar 64 allows the user to select the camera position of the video. Thus, in the exemplary embodiment of Fig. 6, the user may select between five different cameras 51a, 51b, 51c, 51d, 51e which show the respective scene of his activity from five different angles. The number of cameras may be different and may range from only a single camera to dozens of cameras. The user selects the camera by tapping or clicking on the respective button which is associated with the camera. The position of the camera selection bar 64 may be different, for example on the bottom of the display 61 or on the sides. Furthermore, the display 61 may show no camera selection bar 64 at all.

On the right side of the display a feedback and statistics area 65 is shown. In this area statistics and feedback is shown which has been extracted according to the invention from the sensor data obtained from at least one sensor 31, 32, 33, 34, 35 of a sensor assembly 12 worn by the user during the activity. Thus, in the exemplary embodiment of Fig. 6, the feedback and statistics area 65 shows the speed of a ball, e.g. during a scene which shows a shot performed by the user. In the middle, the feedback and statistics area 65 shows the name of a trick the user has performed in one scene, e.g. around-the-world, juggling with the ball, and the like. Furthermore, the feedback and statistics area 65 provides an action counter which counts for example all shots to the goal, all 1-on-1-situations, all dribblings, passes, etc. Thus, in the beginning of the video, the counter is at zero and increments with each particular action, i.e. event the user performs in the video. The content of the feedback and statistics area 65 may be different. For example, it may show only the ball speed or only the performed action (e.g. trick, pass, shot, etc.) or show both. Also, the position of the feedback and statistics area 65 may be different, for example on the bottom of the display 61 or on the sides. Furthermore, the display 61 may show no feedback and statistics area 65 at all.

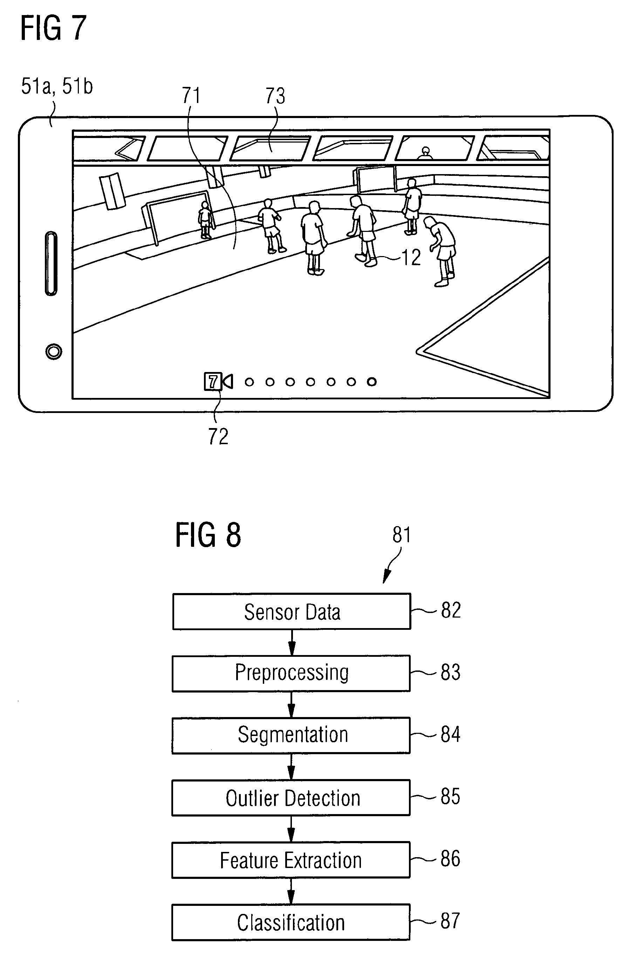

Fig. 7 illustrates how the summary video (or "show reel" or "highlight reel") can in particular be presented to a user of a mobile device 51a, 51b, such as for example a smartphone or tablet PC. The mobile device 51a, 51b comprises a display 71 on which the video is shown. In the example of Fig. 7, the summary video is based on videos taken by seven cameras. The cameras were arranged around an indoor soccer field similar to the setup shown in Fig. 2. A different number of cameras may be used as well, such as five, three, two or only a single camera. The main view of the display 71 shows one video of a particular camera in an enlarged view almost filling up the entire screen.

As shown in Fig. 7, each of the players is wearing at least one sensor assembly 12 near an ankle, one of which has been exemplarily denoted with the reference numeral 12. The sensor assembly 12 stores sensor data while the players are engaged in a match (such as a five-a-side match in the example of Fig. 7) as described in detail in this specification. The sensor data is processed as described in detail in this specification to detect certain events such as kicks, passes, shots, dribblings, 1-on-1-situations, etc. The events are associated with corresponding video frames in the videos taken by the cameras (seven in the example of Fig. 7) to obtain a summary video (or "highlight reel" or "show reel") as described in detail in this specification. The video is presented to a user of a mobile device as illustrated with reference to Fig. 7.

In the example of Fig. 7 a camera selection area 72 is shown on the bottom of the screen. The position of the camera selection area 72 may be different, for example on the top of the display 71 or on the sides. Furthermore, the display 71 may show no camera selection area 72 at all. The camera selection area 72 comprises a pictogram of a camera showing the number of the camera which is actually selected as the main camera (i.e. the camera being associated with the enlarged video filling up almost the entire screen). In the example of Fig. 7, this number is seven, but could be any value in the range of one to seven. This range could be different if a different number of cameras had been used. For each camera a dot is shown in the camera selection area 72. The user may change the main camera either by tapping or clicking on one of the dots or by sliding with one or more fingers over the display, for example from left to right, from right to left, from top to bottom, or from bottom to top.

In the example of Fig. 7 a camera overview area 73 is shown as well on the top of the display 71. The position of the camera overview area 73 may be different, for example on the top of the display 71 or on the sides. Furthermore, the display 71 may show no camera overview area 73 at all. The camera overview area 73 shows a small scale video of each of the remaining cameras which are not shown in the enlarged view on the display 73. Thus, in the example of Fig. 7, six small videos are simultaneously shown in the camera overview area 73.

When the user changes the main camera as described above, the video of the previous main camera is shown in the camera overview area 73 instead of on the largest portion of the screen. Instead, the video of the new selected main camera is shown on the largest portion of the screen and removed from the camera overview area. For example, as the user changes the main camera from camera seven to camera six by sliding over the display 73, the video of camera six may be substituted in the camera overview area 73 by the video of camera seven. At the same time, the video of camera seven making up the largest portion of the screen is substituted by the video of camera six.

It should be noted that additional information may be shown on the display 71 as well, such as feedback and statistics information as explained with reference to Fig. 6. For example, the speed of a ball may be estimated based on the sensor data obtained from a sensor assembly 12 of one of the players and may be shown as an overlay over the video of the main camera for example in km/h or mph while the videos show the corresponding shot.

The sensor assembly 12 could also be used as a kind of activity tracker. To this end, the sensor assembly 12 could for example be attached to a strap (such as the strap 41 shown in Fig. 4), bracelet or similar and could be worn e.g. at the wrist or ankle. The sensor data obtained by the at least one sensor 31, 32, 33, 34, 35 in the sensor assembly 12 could be used to count steps, distance, calories burned, etc. Also, the sensor data could be used to count for example soccer related tricks (such as around-the-world, juggling with the ball, etc.) which a person wearing the sensor assembly 12 has performed during a day. If the sensor assembly 12 is equipped with a satellite navigation module 312, the sensor assembly 12 could also save the geolocation where the tricks were formed and/or were the person performed other sports activities like running, etc. The gathered activity statistics could be distributed to consumer devices and/or social media platforms as described with reference to Fig. 5.

Fig. 8 depicts an exemplary sequence 81 of steps for detecting an event in the time-series of sensor data 82. The sensor data 82 is obtained from at least one sensor 31, 32, 33, 34, 35 in a sensor assembly 12 as described with reference to Fig. 3. The sequence of steps comprises preprocessing 83 the time-series, segmenting 84 the time-series in a plurality of windows, detecting 85 outliers, extracting 86 a plurality of features from the time-series in each of the plurality of windows, and detecting 87 an event class associated with the plurality of windows based on the plurality of features extracted from the time-series in each of the plurality of windows. In the following, each of those steps is described in more detail.

The time-series can be written as $T = (s[0], s[1], ... , s[N - 1])$, where Ndenotes the number of samples and $s[k]$ the amplitude of the sensor data of one axis at sampling point k.

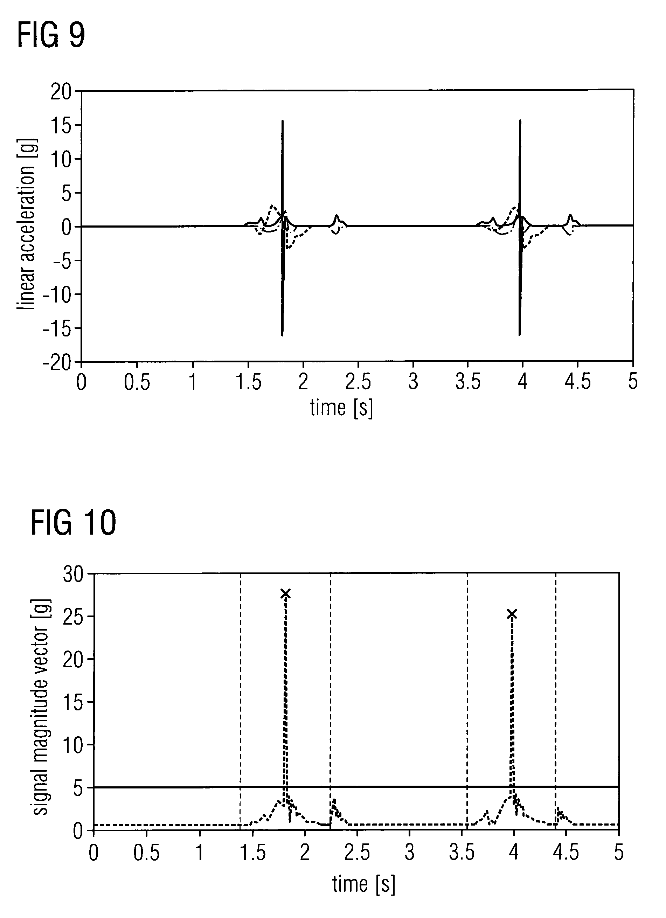

An exemplary time-series obtained from a 3-axis accelerometer is shown in Fig. 9. In this plot the abscissa refers to the time in seconds, whereas the ordinate refers to the acceleration measured in units of the earth's gravitational acceleration g. The plot shows the temporal evolution of the acceleration in all three dimensions (three axes). This exemplary time-series was obtained by an accelerometer placed inside a soccer shoe while the soccer player wearing the shoe was making two subsequent short passes.

In a first sequence step 83 the time-series of the sensor data is preprocessed, e.g. by low-pass filtering, downsampling, Butterworth filtering, generating a moving average, or similar methods. Low-pass filtering removes the high-frequency components from the signal, which are substantially due to noise. Downsampling maps a time-series sampled with high frequency (e.g. 10 to 10000 Hz, preferably 1000 Hz) to a lower frequency time-series (e.g. 1 to 1000 Hz, preferably 100 Hz) by combining adjacent sampling points. Besides removing high-frequency components, this also reduces computational complexity as fewer data points are to be processed.

For the step 84 of segmenting, the signal magnitude vector $SMV$ of the three axes $s_1, s_2, s_3$ of the accelerometer may be computed according to $SMV[k] = \sqrt{s_1^2[k] + s_2^2[k] + s_3^2[k]}$. More information about $SMV$ can be found in Shaoyan Zhang, Alex V. Rowlands, Peter Murray, and Tina L. Hurst, "Physical Activity Classification Using the GENEA Wrist-Worn Accelerometer", Medicine & Science in Sports & Exercise, 44(4): 742-748, 2012. The signal magnitude vector is used to determine energy rich regions in the signal. Events like short passes are represented by high peaks as it can be seen in Fig. 10.

For further processing, only signal parts are processed, in which $SMV$ exceeds a predefined threshold. This procedure minimizes the number of windows that are further processed. Consecutive samples, for which the amplitudes are above the threshold, are denoted as one signal patch.

For each signal patch, the time point corresponding to the maximum $SMV$ determines the center of a fixed sized window which is used for further processing. Fig. 10 shows two examples of windows.

Finding an optimal window size for all events is challenging, since the length of events may differ, e.g. shot and control. Therefore, a novel and intelligent window size determination procedure is proposed which adapts the window size to the length of the event. The $SMV$ of one signal patch is modelled by a Gaussian curve. The parameters of the Gaussian curve can be used to estimate an optimal window size for each event.

The time-series may also be segmented in step 84 in a plurality of windows using matching with a template of an event that is defined using known signals of pre-recorded events. The matching may be based on correlation, Matched Filtering, Dynamic Time Warping, or Longest Common Subsequence (LCSS) and its sliding window variant, warping LCSS.

The sensor data (acceleration, angular velocity, etc.) of the window are the input of an outlier detection step 85. The goal is to remove windows which include instances of undesired actions, e.g. jogging, running or tackling. The proposed method uses a Rule based system, which rates the plausibility of the parameters of the Gaussian curve, and one-class Support Vector Machines for each desired event. Details of one-class Support Vector Machines can be found in Bernhard Schölkopf, John C. Platt, John Shawe-Taylor, Alex J. Smola and Robert C. Williamson, "Estimating the Support of a High-Dimensional Distribution", Neural Computation, 13(7): 1443-1471, 2001.

The next step as shown in Fig. 8 is feature extraction 86. In this step 86 a plurality of features from the sensor data in each of the windows is extracted. Features (also denoted as characteristic variables) are extracted to represent the particular window in a lower dimension.

The extracted features may for example be based on one or more of temporal statistics, spatio-temporal statistics (i.e. statistics over time and locations of more than one sensor), spectral, or ensemble statistics by applying, for example, wavelet transform, principal component analysis (PCA), coefficients of a Linear Predictive Coder (LPC), coefficients (e.g. spectral centroid and bandwidth) of a Fast Fourier Transform (FFT). Other features may be used as well.

Features based on temporal statistics are extracted by applying multivariate analysis to a window to obtain a lower dimensional representation of the window. Methods of multivariate analysis are summarized for example in Alvin C. Rencher and William F. Christensen, Methods of multivariate analysis, 3rd edition, John Wiley & Sons, 2012.

Human motion has limited degrees of freedom analogous to human joints, leading to redundant observations of multiple sensor axes. For example, body axes are related while moving backwards for initiating a kick. The linear relationship between sensor axes, i.e. different dimensions of observations, can be measured by the sample correlation. The correlation coefficient between two sensor axes can be estimated by the Pearson correlation coefficient.

The sample mean of a window is defined by averaging the data samples in one dimension, i.e. the data associated with one sensor axis. Moreover, the signal energy gives evidence of the movement intensity. Human events can thus be analyzed by reflecting the intensity: for example in soccer, the kicking event is presumed to have higher power than other events like short passes or dribbling actions. The signal energy in one observation window in dimension $d$ (i.e. sensor axis $d$) is evaluated by $E_d = \frac{1}{N} \sum_{k=0}^{N-1} (s_d[k])^2$ .

To capture the overall intensity of human motion, the Movement Intensity, *MI,* is intro-duced as accumulation of the normalized energies over all dimensions $D$: $MI = \frac{1}{D} \sum_{d=1}^{D} E_d$ . In addition, the normalized Signal Magnitude Area, *SMA,* is defined as $SMA = \frac{1}{ND} \sum_{k=0}^{N-1} \sum_{d=1}^{D} | s_d[k] |$ , by adding up the absolute values $|s_d[k]|$. Higher-order statistics like kurtosis and skewness can be used as well.

In addition or alternatively, spatio-temporal features such as minimum and maximum values along the dimensions of the window can capture information of intense peaks in the signal. Thus, exemplary temporal and spatio-temporal statistics include sample mean, normalized signal energy, movement intensity, signal magnitude area, correlation between axes, maximum value in a window and minimum value in a window.

In addition or alternatively to temporal or spatio-temporal statistics, wavelet analysis may be used for feature extraction 86 as well. Wavelet analysis can characterize non-stationary signals, whose spectral statistics changes over time. Moreover, it has the property of reflecting transient events as it captures temporal and spectral features of a signal simultaneously. Wavelet transform is performed using a single prototype function called wavelet which is equivalent to a band-pass filter. Multi-scaled versions of the wavelet are convolved with the signal to extract its high-/low-frequency components by a contracted/deleted version of the wavelet. Given a window of sensor data observations, multi-resolution analysis in time-frequency domain is performed by dilating the basis wavelet. The wavelet transform offers superior temporal resolution of the high-frequency components and a superior frequency resolution of the low-frequency components. Details of wavelet analysis can be found in Martin Vetterli and Cormac Herley, "Wavelets and filter banks: Theory and design", IEEE Transactions on Signal Processing, 40(9): 2207-2232, 1992.

Discrete Wavelet Transform can be used to capture the characteristics of human motion. It can be implemented efficiently as fast wavelet transform. It is represented by a filter bank decomposing the signal by a series of low-pass and high-pass filters. At each level i the input signal $s[k]$ is filtered by a low-pass filter $g_i[k]$ and a high-pass filter $h_i[k]$. In subsequent levels, the low-pass filtered signal is successively decomposed into lower resolution by down sampling it by a factor of two, whereas the high-pass filtered signals serve as detail coefficients $q_i$ which can be used as a feature of the respective window. Thus, the sensor data of the window is represented by detail coefficients $q_i$ which serve as features. The wavelet decomposition also provides approximation coefficients (last decomposition), which can also be used as features. Furthermore, features based on approximation/detail coefficients can be computed (like those mentioned before: signal energy, etc.). If the high-pass signal is decomposed equally the transformation is called Wavelet Packet Decomposition. Details of the Discrete Wavelet Transform to capture details of human motion can be found in Martin Vetterli and Cormac Herley, "Wavelets and filter banks: Theory and design", IEEE Transactions on Signal Processing, 40(9): 2207-2232,1992.

Daubechies wavelets can be used in the context of the present invention, because they can be implemented computationally efficient. For example, a Daubechies wavelet of order seven can be used for feature extraction.

Thus, a plurality of features can be extracted based on temporal, spatio-temporal, spectral, or ensemble statistics by applying Wavelet Analysis, Principal Component Analysis and the like. Exemplary features include sample mean, normalized signal energy $E_d$, movement intensity (MI), signal magnitude area (SMA), correlation between axes, maximum value in a window, minimum value in a window, maximum detail coefficient $q_i$ at level $l$ obtained by a wavelet transform.

Given a feature set of all extracted features, the most relevant and nonredundant features should be selected to reduce the complexity of the implementation of the method. Any redundancy between features can result in unnecessarily increased computational costs. Simultaneously, this subset of features should yield the best classification performance. One can discriminate between different selection techniques: wrapper methods, selection filters and embedded approaches.

Wrapper methods evaluate the performance of the method according to the invention using different feature subsets. For example, sequential forward selection adds the best performing features iteratively.

Selection filters are a fast method to find the most important features as no classifier is involved in the selection procedure. The mutual information can indicate the relevance of feature subsets and can be estimated by different filter techniques.

Finally, an embedded selection can be used to avoid the exhaustive search by wrapper methods and the estimation of probability density functions by selection filters. Embedded selection is reasonable as some classifiers used in method step 87 already include a rating of the feature importance.

For example, Random Forest classifiers can be used for feature selection. A Random Forest can be described as an ensemble of decision tree classifiers, growing by randomly choosing features of the training data. For each tree, a subset of training data is drawn from the whole training set with replacement (bootstrapping). Within this subset, features are chosen randomly and thresholds are built with their values at each splitting node of the decision tree. During classification, each tree decides for the most probable class of an observed feature vector and the outputs of all trees are merged. The class with the most votes is the final output of the classifier (majority voting). Details of Random Forest classifiers can be found in Leo Breiman, "Random forests", Machine learning, 45(1): 5-32, 2001.

As shown in Fig. 8, in the next step 87 of the sequence according to the invention, an event class associated with each of the windows based on the plurality of features extracted from the sensor data in the respective window is estimated. This step is also referred to as classification.

Several classifiers can be used such as Naive Bayes, Support Vector Machine and Random Forest, AdaBoost classifier, a Nearest Neighbor classifier, a Neural Network classifier, a Perceptron classifier, a Rule based classifier, or a Tree based classifier.

In the Naive Bayes approach, the posterior probability density function can be written as

$$p\!\left(\widetilde{y}\mid\widetilde{x}\right) = \frac{p(\widetilde{y})p(\widetilde{x}\mid\widetilde{y})}{p(\widetilde{x})}$$ applying the Bayesian formula. Instead of maximizing the poste-rior probability density function, the class conditional probability density function $p(\widetilde{x}|\widetilde{y})$ can be maximized to estimate the class $\widetilde{y}$:

$$\hat{y} = \arg\max_{\widetilde{y}\in Y} p\!\left(\widetilde{y}\mid\widetilde{x}\right) = \arg\max_{\widetilde{y}\in Y} p(\widetilde{y})p(\widetilde{x}\mid\widetilde{y}).$$ Naive Bayes classification solves this equation under the assumption that all components of feature vector $\widetilde{x}$ are mutually independent. This leads to the simplification: $y$ = argmax

$$\hat{y} = \arg\max_{\widetilde{y}\in Y} p(\widetilde{y})\prod_{f=1}^{vF} p\!\left(\widetilde{x}_f \mid \widetilde{y}\right).$$

The class conditional probability density functions, observing feature $\widetilde{x}_f$ given the class $\widetilde{y}$, are assumed to be Gaussian probability density functions: $p(\widetilde{x}_f \mid \widetilde{y}) \sim N(\widetilde{x}_f ; \mu_f, \sigma_f^2)$. Thus the probability density functions are only defined by their means $\mu_f$ and variances $\sigma_f^2$.

Now, given an unlabeled feature vector $\widetilde{x}$ in method step 140, the Gaussian distributions $p(\widetilde{x}_f|\widetilde{y})$ are evaluated for each class $\widetilde{y} \in Y$ at each feature value of $\widetilde{x}$. Then, the class is estimated by the equation derived above:

$$\hat{y} = \arg\max_{\widetilde{y}\in Y} p(\widetilde{y})\prod_{f=1}^{vF} p\!\left(\widetilde{x}_f \mid \widetilde{y}\right)$$ to obtain $\hat{y}$. In this way, the event class can be estimated in method step 87 based on a Naive Bayes classifier. An overview of the Naive Bayes approach for classification can be found in Sergios Theodoridis and Konstantinos Koutroumbas, Pattern Recognition, 4th edition, Elsevier, 2008.

Another classifier which may be used in method step 87 is based on a Support Vector Machine (SVM). SVMs focus directly on the class boundaries, i.e. in the case of linear SVM on the class boundaries in the original feature space.

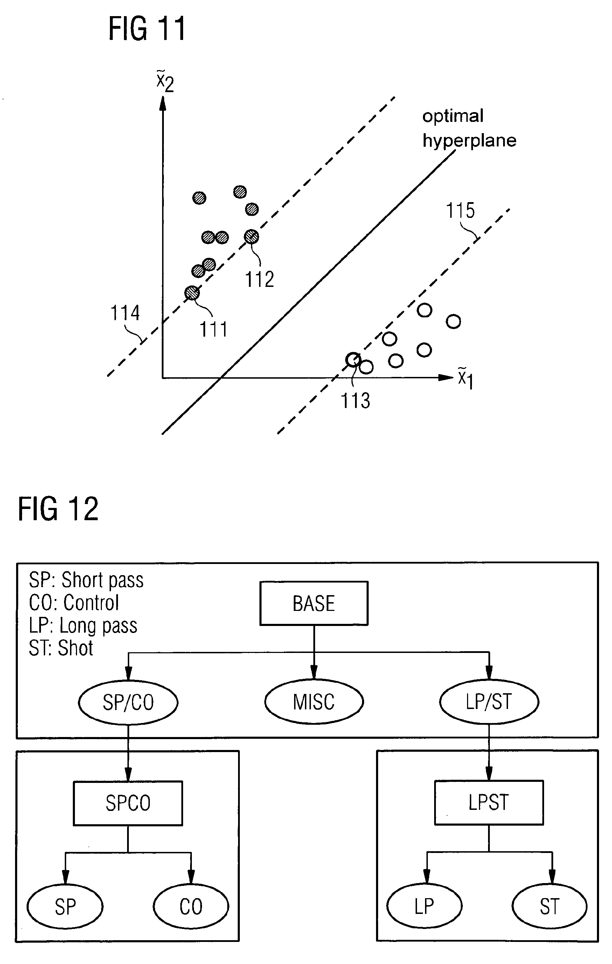

The feature space is defined as the mapping of the feature vectors in a multidimensional system, where each dimension of the feature vector corresponds to one coordinate axis. The concept is to find the largest linear margin between the feature vectors of two classes as illustrated in Fig. 11. In this case, the two-dimensional feature sets are linearly separable. The feature vectors 111, 112 and 113 lying on the margins 114 and 115, called support vectors, define the optimal hyper-plane.

Given a training dataset $D$, the feature vectors of the event are analyzed in the feature space. A maximum margin is found by the *SVM,* separating the classes with a maximum distance. This distance equals the maximum distance between the convex hulls of the feature sets. Apart from using a linear kernel, other kernel types can be applied, e.g. polynomial or RBF (radial basis function). A detailed description can be found e.g. in Richard O. Duda, Peter E. Hart and David G. Stork, "Pattern Classification", 2nd edition, John Wiley & Sons, 2000.

Now, given an unlabeled feature vector $\tilde{x}$ in method step 87, it is analyzed in the feature space. The distance and the location with respect to the separating hyper-plane give evidence about the posterior probabilities. However, the probabilities are not provided directly as only distances are measured. The sign of the objective function corresponds to the most probable class and is used as estimate $\hat{y}$. In the case of more than one event to be determined, the distance vectors to several hyper-planes separating the feature space have to be considered.

A further approach which may be used in method step 87 is based on Random Forests. As mentioned already, a Random Forest involves an ensemble of decision tree classifiers, which are growing by randomly choosing features from the training dataset.

Given a training dataset $D$, the trees can be built as described e.g. in Trevor Hastie, Robert Tibshirani, Jerome Friedman, "The elements of statistical learning", volume 2, Springer 2009. For every tree a subset of data is drawn from the training dataset with replacement (bootstrap data). Then, each tree is grown from the bootstrap data by recursively repeating the following steps until the minimum node size is reached: firstly, a subset of features is selected randomly. Secondly, among the subset, the feature providing the best splitting between classes is picked to build the threshold at the current node. The chosen feature is omitted for the next iteration. Thirdly, this node is split into daughter nodes.

Now, given an unlabeled feature vector $\tilde{x}$ in step 87, the class $\tilde{y}$ is estimated according to the estimated class of all trees. The class with the majority of votes corresponds to the estimate of the Random Forest $\hat{y}$.

The classification of the desired events, e.g. short pass (SP), long pass (LP), control (CO) and shot (ST) is performed in a hierarchical manner.

As shown in Fig. 12, method step 87 may first discriminate between two event groups ("SP/CO" and "LP/ST"). In a further classification step, if one of the event groups has been determined in the first classification step, one of the events in this group is determined. Thus, in the example of Fig. 12, the event "SP" or "CO" is determined in the group "SPCO" and the event "LP" or "ST" is determined in the group "LPST". In the first level, a MISC/NULL class can also be modelled including actions like running/jogging/tackling, which were not removed in the previously applied outlier detection procedure. Thus, two classification steps can be used in this example. In general, however, only a single classification step or more than two classification steps may be used according to the present invention.

Based on the event detected as described above, feedback may be provided to the person. Thus, the person may be informed about e.g. his or her performance during training or a match. Preferably, such feedback is provided in real-time.

For example, while the person wearing the sensor assembly 12 is performing a sports activity, the central processing unit 36 in the sensor assembly 12 may process the sensor data and generate certain feedback data, such as steps taken, running distance, calories burned, a count of kicks, passes, shots, etc.

Feedback may be provided to the person based on the estimated event. Thus, the person may be informed about e.g. his/her performance during training or a match. Such feedback could be provided in real-time. For example, feedback could be provided on a display 313 of the sensor assembly 12 or of a smartphone (e.g. showing running distance, number of shots, etc.), on a display of a watch or on an external display arranged e.g. at a sports ground.

Feedback may also be provided not in realtime. For example, feedback could be provided after an activity (e.g. after a match or training) e.g. in a locker room (on a display mounted on a wall or on a person's electronic device like a smartphone, tablet PC, etc.), sports area (e.g. a display in a stadium, hall, field, etc.) or at home. To this end, the feedback data could be stored in a database or cloud storage as described above.

Furthermore, summary statistics may be provided based on the determined event. In this way, the statistics may be tailored to specific classes of events. For example in a soccer application, statistics about the number and intensity of shots, shot speed, time on ball, number of long passes and short passes, duration of dribblings, running time with/without ball, time of no movement, juggling, performed tricks, etc. may be provided. Summary statistics for basketball may comprise the number of puts, passes and dribblings, the time of ball possession, intensity of jumps, etc. Summary statistics for tennis may comprise the number of hits, estimated ball speeds, the percentage of forehand and backhand hits, the number and intensity of services, etc. Those statistics can be provided if the tennis player is equipped with a sensor assembly 12 near his hand. If the tennis player is additionally equipped with a sensor assembly 12 near one or both of his feet, running statistics may also be provided, such as the total distance, number of sprints (e.g. to the net), etc.

An exemplary algorithm for ball speed estimation comprises preprocessing, feature extraction and regression. In the preprocessing step, a window with fixed size, e.g. around the energy rich regions of the sensor data, is defined. Features are computed based on the sensor data in the window, e.g. number of extreme points, mean, variance, skewness, kurtosis, spline interpolation or maximum amplitude. Additional features can be computed e.g. on the signal magnitude vector signal of the accelerometer. In the regression step, different approaches can be applied, e.g. Support Vector Regression, or linear regression. Details of Support Vector Regression can be found in Alex J. Smola and Bernhard Schölkopf, "A tutorial on support vector regression", Statistics and Computing, 14(3): 199-222, 2004.

As it can be seen in Fig. 9, the maximum range of the sensor can be reached during a high-intensity event. To overcome the drawback of saturation, a sensor with a higher range can be used. By using only one sensor, e.g. one accelerometer, a trade-off between a low sensor range but a high resolution and a high sensor range but a low resolution has to be found. In order to exploit the advantages of both sensor types, sensor fusion techniques can be applied.

Instead of using the above mentioned regression types, principle component regression can be used which enables the reduction of feature dimensions and deals with the problem of multicollinearity. A detailed overview of principle component regression can be found in William F. Massy, "Principal Components Regression in Exploratory Statistical Research", Journal of the American Statistical Association, 60(309): 234-256, 1965.

The described algorithms so far focus on the classification of soccer-specific actions meaning that the final output of the data analysis is a chronological sorted list of actions. In order to sort the list of actions according to their importance, sensor-based ranking algorithms can be applied. In the ranking algorithm, different action models can be established and applied to pre-segmented sensor data. The goal of each action model is to compute one score for each pre-segmented action. The list of actions is sorted by the score in descending order. The generic architecture of action models consists of preprocessing, feature extraction, and classification. In the following paragraph, the action model SHOT_ON_GOAL is described. For each pre-segmented action, the score gives information about the probability that this action contains a shot on the goal.

In the preprocessing step, the sensor data of accelerometer and gyroscope is normalized, e.g. between -1 and 1, and the combined energy is computed. The combined energy is defined as the summation of the signal magnitude vector of the normalized accelerometer and gyroscope signals. A window is further shifted over the combined energy signal. The size of the window is chosen as the duration of a typical shot. The output of the windowing contains the maximum observed energy and the corresponding window borders. The preprocessing step further includes the ball contact detection by applied high-pass filtering and finding the maximum in the energy signal of the accelerometer signal. The preprocessing step further includes the automatically leg alignment in which the legs are classified to event and supporting leg. The event leg is the leg which performed the shot. The leg with the highest angular velocity in the sagittal plane is defined as the event leg.

In the feature extraction step, features like the duration of saturation in the linear acceleration, the minimum angular velocity in the sagittal plane during the saturation phase, and the energy in the supporting leg signals are computed.

In the classification step, among others the Support Vector Machine can be implemented. The posterior probability of the classifier is defined as the score of the current action.

The window borders which correspond to the maximum observed energy can further be used to define the time in the highlight video when special video effect should be applied, e.g. "high-contrast illumination" or "ball on fire".

For further interesting actions, additional action models can be developed. A special action model is a manual triggering event, e.g. tapping three times on the sensors. This event gives the player the chance to define scences, which should be available in the final highlight reel.

Since each action model computes one score for each pre-segmented action, a final ranking of the actions has to be defined. Different schemes can be applied. The scores of the single action models can be weighted and combined to get a final score and a final ranking. Different action models can further be prioritized resulting in a higher position in the sorted list of actions.

The list of returned actions can further be reduced e.g. by defining a threshold for the posterior probability or the number of actions that should be returned.

The action models described so far are based on the sensor data of a single player. The ranking of the actions can further be improved by integrating the information of the team mates and the opponents, e.g. the higher the number of involved players in the action, the higher the score. The ranking of actions can further be improved by integrating the video data itself. Different algorithms for player and ball tracking can be integrated in the processing pipeline.

The method may also be designed such that the system works without the a-priori knowledge about the sensor orientation. A low pass filter can be applied to the vertical axis of the accelerometer signal. Periods of standing can be detected based on thresholding techniques. Depending on the sign of the standing periods, the orientation of the sensor can be determined. A wrong orientation can be detected and corrected by applying this procedure.

The method may also be designed such that the system works if one sensor is defect. In this case, the signal magnitude area is computed for the accelerometer signal and used as ranking score.

The method may also include a goal detection based on player fusion. Players show a specific behavior after a goal is performed: most of the players stop for a short time and walk slowly. This behavior can be analyzed by fusing the sensor data of different players. Based on this detection special effects could be applied to the video cuts at the end.

Instead of using generic signal processing features as regression input, biomechanical-driven features can be used derived from the sensor data of multiple sensor positions such as pelvis, thigh, shank, ankle, and foot. The biomechanical modeling includes the detection of different phases of the kick, e.g. backswing, leg cocking, leg acceleration, and follow through, and the computation of the lower leg velocity. Knee angle and knee moment can further be computed using the relative orientation of the thigh and shank. The orientation of the segments can be determined by an Extended Kalman Filter. Fusing different sensors increase the accuracy of ball speed estimation systems.

Instead of using handcrafted feature extraction in classification and regression tasks, deep learning techniques can further be applied to the classification of soccer-specific actions or the estimation of the ball speed. Deep learning refers to the set of machine learning approaches in which supervised and/or unsupervised approaches such as deep convolutional neural networks, deep belief networks, or autoencoders are applied to automatically learn hierarchical representations in deep architectures.

Summary statistics obtained by the method described herein may be combined with a video showing detected events of a certain player (e.g. all his shots). In this way, a combined summary or feedback is obtained. The combination of video and statistics may be performed on the device 14 or may be performed on a consumer device such as a mobile device 51a, 51b (e.g. a smartphone, tablet PC, smartwatch), desktop PC 51c or notebook 51d.

Summary statistics based on the detected event (and optionally a generated video of certain events) could be transferred to other people like a trainer, spectators or other people interested in those statistics. The transfer could be over the internet via a live stream. The transfer could be based on media such as Wifi, WLAN, BT, BTLE, NFC, RFID, USB, Ethernet, Thunderbolt and the like. Based on the summary statistics (and optionally the generated video of certain events), the player could obtain feedback from e.g. a trainer or a scout as will be described below.

Furthermore, based on the summary statistics (an optionally the generated video of certain events) a special area in a store or a stadium could be unlocked, i.e. depending on how well the player performed. For example if the player achieved a certain number of ball contacts during a match, he is awarded access to a certain area in a store or stadium.

The sensor data may also be used to provide a step-over counter (i.e. the number of step overs), a football activity monitor, a keepy-uppy tracker (i.e. counting ball contacts while juggling the ball), "around the world" (i.e. holding the ball up with one leg and trying to move the leg around the ball before it hits the ground), or a 1-on-1 counter (i.e. counting how often the player engaged in a one-on-one situation on the field, for example trying to bypass and/or tricking the opponent). For example, the sensor data could be analyzed to determine the number of ball contacts a player had without allowing the ball to hit the ground (keepy uppy). The statistics mentioned above could be determined based on corresponding detected events, i.e. an event could be the contact of a foot with the ball (for keepy-uppy) or a circular movement (for "around the world").

If an event associated with a kick is detected, the speed of a ball may be estimated based on the sensor data. Thus, the person may obtain feedback about his/her kicking performance. The ball speed may be estimated by preprocessing, feature extraction and regression. The sensor data may be segmented and features may be computed for each segmented region. Different regression techniques can be applied, which use the computed features as input.

After a match (e.g. a soccer match of two teams, a tennis match of two players, etc.), summary statistics together with a video compiled from detected events can be automatically sent to a global database such as a cloud for trainers, scouts, or other people to review the summary statistics and the video. Details of such data transmission have been provided with reference to Fig. 5. A trainer or scout could then access the cloud with a mobile device 51a, 51b, a desktop PC 51c, or a notebook 51d as described with reference to Fig. 5 and study the video and/or summary statistics generated according to the present invention. Based thereon, the trainer or scout could provide feedback to the player who is featured in the video (e.g. by posting a comment or a private note via a social media platform or by email, short message service, etc.). A scout could select the player for further evaluation.

Heat maps could be created based on data provided by a satellite navigation system module 312 in the context of the present invention, such that on a map other persons can see where and when tricks, shots, etc. where made. A heatmap in this context is understood as a map which associates with each location the duration that the person spent at that particular location. The duration is then mapped to a color scheme. For example, a long duration is indicated by the color red, whereas a short location is indicated by the color blue. Intermediate values are indicated by corresponding intermediate colors (e.g. colors from a spectrum of natural colors). The heatmap can be used to analyze where the person actually spent most of the time, e.g. during a match. To this end, the heatmap could be overlaid with a picture or schematic drawing of the playing field (e.g. a football ground, tennis court, basketball field, etc.). In this way, the heatmap shows the preferred position of the person.

Tricks which were performed by a professional player could be recorded via a sensor assembly 12 and the camera 11 or the cameras 11a, 11b, 11c, 11d, 11e. Other persons are then asked to repeat the trick and get rewarded or awarded depending on how well they repeated the trick. Instead of by a professional player, the trick could be performed by an amateur, recreational player, or any player or person.

Based on the recorded sensor data, the person could obtain points or scores. For example depending on how long and how intense the person performed a certain activity, e.g. soccer, basketball or tennis, he is awarded points or scores. For example if the user played soccer or basketball in a park or on a street, practiced tricks, or even played a soccer, basketball or tennis game on a PC or game console where he is represented by an avatar, he may be awarded corresponding points or scores. It is also possible to count certain events (e.g. shots, long passes, short passes, dribblings, tricks, etc.) extracted from the sensor data and based on that provide advantages, awards and/or rewards to the person if he reaches a certain amount of events.

Points or scores could be awarded in general if the user is active. The sensor assembly 12 then operates like an activity tracker as has been described before. The more movements the user performs, the more points or scores he obtains.

The points or scores may unlock a special area in a store. For example, if the person reached a certain number of points or scores (e.g. 1.000), a special area in a store may be unlocked for him, i.e. he is granted access to that area. The area may contain special offers like limited editions or collector's items. The area may be locked to other persons by an automatic door or barrier. If the person approaches the door or barrier, a wireless transceiver module 39 in the sensor assembly 12 may transmit a wireless signal (e.g. via Wifi, WLAN, Bluetooth, Bluetooth Low Energy, Zigbee, ANT, ANT+ to a receiver near the door or barrier which identifies the person. If the person has enough points or scores, the door or barrier may open and the person is granted access to the special area.

Alternatively, the special area may be part of an online store. The server on which the online store is hosted asks for the identity of the person, e.g. by name and/or password and subsequently retrieves the number of points or scores associated with the person from another server, e.g. a cloud server 52. If the person has enough points or scores, he may be allowed to navigate to a special area in the online score with special offers like limited editions or collector's items.

In the context of a store or online store it is also possible to reward the person with discounts based on his points or scores. For example, for every point or score, a discount may be rewarded either in percent (e.g. one percent per 100 points/scores) or as a fixed amount (e.g. one EUR or Dollar per 100 points/scores).

Furthermore, it is possible to grant access to exclusive media content based on the points or scores. For example, if the person has a certain minimum amount of points/scores (e.g. 1000), he is granted access to special sports media (video clips, workout music, photos, etc.) on a media server.

The points or scores could also be used to award the player with online batches. For example, if the player accumulated 1000 points or scores, he is awarded a bronze batch, if the player accumulated 5000 points, he is awarded a silver batch, if the player accumulated 10000 point, and he is awarded a gold batch. The batches could be shown on a social media profile of the player (e.g. facebook, twitter, etc.).

The points or scores could also be associated with the performance of a player's avatar which he uses in a computer game. The more points or scores the player accumulates by certain activities (e.g. soccer, basketball, tennis, everyday activities, etc.), the higher the performance of the avatar may be. For example, the avatar may obtain certain skills and/or equipment if a certain number of points or scores is reached. An example would be a soccer avatar who obtains the ability to perform bicycle kicks and/or a better pair of shoes if the player reaches e.g. 1000 points. It is also possible that the performance of an entire team of avatars is increased if their associated players increase their number of points or scores. For example, the performance of a team of soccer players in a real match could determine the performance of their team of avatars in a soccer game.

The sensor assembly 12 could also be used to track when the person visits a stadium to watch a match. For example, the stadium could be equipped with a RFID/NFC tag, a Bluetooth or BTLE beacon, a WLAN hotspot, etc. to communicate with the sensor assembly 12 via a wireless transceiver module 39. In this way, an identifier which is associated with the stadium could be transmitted to the sensor assembly 12 and stored in the memory 13. This information could be later transmitted to e.g. a user's social media profile (e.g. via the wireless transceiver module 39 or via a connector 38). Thus, the social media profile would show the information that the person visited the stadium to watch a certain match.

It is also possible that the sensor assembly 12 transmits an identifier associated with the sensor assembly 12 to a receiver installed in the stadium and that the identifier is further transmitted from the receiver to a server in the Internet (e.g. a social media platform server) which shows the information that the person watched the match.

Instead of a stadium, a sports outfitters shop could be equipped with a RFID/NFC tag, a Bluetooth or BTLE beacon, a WLAN hotspot, etc. to communicate with the person's sensor assembly 12. In the manner described above, the information that the person visited the shop could be automatically posted on the person's social media profile.

The present invention may be used with a wide spectrum of activities, in particular sports activities. For example when playing basketball, meaningful actions or events could be detected during play, such as dunk, jump shot, 360, cross over, shot, shot block. A highlight reel of a basketball game could be generated based on the method and system of the present invention. In the case of basketball, more than one sensor assembly 12 could be worn by the player, e.g. one sensor assembly 12 could be worn on one of his arms, another sensor assembly 12 could be worn on one of his legs. In general, sensor assemblies 12 could be worn at arbitrary locations of the body, e.g. on the hips. As described before, the sensor data from more than one sensor assembly 12 can be combined into a single time-series.

It is also possible that a sensor assembly 12 is attached to or integrated into a basketball to record the movements of the basketball. The sensor data of the basketball could then be used to enhance the detection of events by combining the sensor data from the basketball with the sensor data from the sensor assemblies worn by the basketball players.

Further exemplary sports activities are running and tennis. If the present invention is applied to tennis, a summary video ("highlight reel" or "show reel") could show, e.g. all fore-hands or all backhands and/or all services of a player. If the invention is practiced during a double, it is possible to have the video show the mentioned events of a certain player only. The sensor assembly 12 could be worn by a runner (e.g. near one or both of his ankles) and sensor data could be stored in the memory 13 during a run. The sensor data could then be analyzed later as described herein to analyze the running technique of the runner. For example, the sensor data could be used to detect how his feet touch the ground and how he pronates and supinates. Changes in his movements could be identified over time. In this way, it could be determined when the runner started to become fatigue. It is also possible to calculate the power output or calculate the burned calories of the runner over time or to obtain a total of the power output.

As already described, the camera 11 or the cameras 11a, 11b, 11c, 11d, 11e which can be used in the context of the present invention could be smartphone camera. Furthermore, the camera of a tablet PC, notebook, camera stick, smartwatch, etc. could be used. Also, an action cam, such as Gopro® could be used. If the sensor data are processed (for event detection and association of an event with a video frame) on a device which is separate from the camera, the video may be transmitted to the device via a wired (e.g. USB, Ethernet, Thunderbolt, etc.) or wireless connection (e.g. Wifi, WLAN, BT, BTLE, NFC, RFID, ANT ®, ANT+, ZigBee ®, etc.).

The video generated from the at least one video frame associated with the detected event, i.e. the summary video, "highlight reel" or "show reel" may be shown on a video wall at a soccer pitch for example. To this end, the device 14 which processes the sensor data and the recorded video or videos may be connected to the video wall via wired (e.g. USB, Ethernet, Thunderbolt, etc.) or wireless connection (e.g. Wifi, WLAN, BT, BTLE, NFC, RFID, ANT ®, ANT+, ZigBee ®, etc.) to transfer the summary video to the video wall.

In the following, further embodiments are described to facilitate the understanding of the invention:

1. Method for associating frames in a video of an activity of a person with an event, comprising the steps:

    a. recording a video of an activity of a person;
    b. storing a time-series of sensor data obtained from a sensor assembly comprising at least one sensor coupled to the person while the person is performing the activity;
    c. synchronizing the video with the sensor data;
    d. detecting an event in the time-series; and
    e. associating the event with at least one corresponding frame in the video showing the event.

2. Method according to the preceding embodiment, further comprising the step: using the at least one frame to generate a second video showing predetermined events of the activity of the person.

3. Method according to one of the preceding embodiments, wherein the step of synchronizing the video with the sensor data comprises:

    detecting a predetermined synchronization event in the time-series and in at least one frame in the video.

4. Method according to one of the preceding embodiments, wherein the activity is a sports activity.

5. Method according to one of the preceding embodiments, wherein the activity is soccer.

6. Method according to one of the preceding embodiments, wherein the event is a kick, a short pass, a long pass, a shot, or control of a ball.

7. Method according to one of the preceding embodiments, wherein the at least one sensor is an accelerometer, a gyroscope, or a magnetic field sensor.

8. Method according to one of the preceding embodiments, wherein the sensor assembly comprises two or more sensors and the sensor data from the two or more sensors are combined in the time-series.

9. Method according to one of the preceding embodiments, wherein the step of recording the video of the activity of the person comprises recording the video with at least two cameras.

10. Method according to one of the preceding embodiments, further comprising the step of saving the video in a database.

11. Method according to one of the preceding embodiments, wherein the step of detecting an event in the time-series comprises:

preprocessing the time-series;
segmenting the time-series in a plurality of windows;
detecting outliers;
extracting a plurality of features from the time-series in each of the plurality of windows; and
estimating an event class associated with the plurality of windows based on the plurality of features extracted from the time-series in each of the plurality of windows.

12. Method according to the preceding embodiment, wherein the step of preprocessing comprises low pass filtering and downsampling.

13. Method according to one of embodiments 11 to 12, further comprising the step: segmenting the preprocessed time-series in a plurality of windows with fixed window size.

14. Method according to one of embodiment 13, further comprising the step: centering the windows at maximum peaks in the time-series.

15. Method according to one of embodiments 11 to 14, further comprising the step: removing the windows with a maximum peak at the center below a threshold.

16. Method according to one of embodiments 11 to 15, further comprising the step: adapting the window size to the shape and/or extent of the event.

17. Method according to one of embodiments 11 to 16, further comprising the step: detecting outliers by Rule based systems and/or one-class Support Vector Machines.

18. Method according to the preceding embodiment, wherein features are computed in the windows which do not comprise outliers.

19. Method according to one of embodiments 11 to 18, wherein the features are based at least on one of temporal, spatio-temporal, spectral, or ensemble statistics by applying, for example, wavelet analysis, principal component analysis, PCA, or Fast Fourier Transform, FFT.

20. Method according to one of embodiments 11 to 19, wherein the features are based on one of simple mean, normalized signal energy, movement intensity, signal magnitude area, correlation between axes, maximum value in a window, minimum value in a window, maximum detail coefficient of a wavelet transform, correlation with a template, projection onto a principal component of a template, or distance to an eigenspace of a template, spectral centroid, bandwidth, dominant frequency.

21. Method according to one embodiments 11 to 20, further comprising the step: reducing the number of features by feature selection procedures.

22. Method according to one of embodiments 11 to 21, wherein the event class is estimated based on a Bayesian classifier such as Naive Bayes classifier, a maximum margin classifier such as Support Vector Machine, an ensemble learning algorithm such as AdaBoost classifier and Random Forest classifier, a Nearest Neighbor classifier, a Neural Network classifier, a Rule based classifier, or a Tree based classifier.

23. Method according to one of embodiments 11 to 22, further comprising the step: fusing the decisions of several classifiers in order to estimate the final prediction of the event class.

24. Method according to one of embodiments 11 to 23, further comprising the step: detecting the event by matching of a template using correlation, Matched Filtering, Dynamic Time Warping, or Longest Common Subsequence (LCSS) and its sliding window variant, warping LCSS.

25. Method according to one of embodiments 11 to 24, wherein estimating the event class comprises:

discriminating between merged event groups containing events which are similar in shape; and
discriminating between single events belonging to one specific group.

26. Method according to one of embodiments 11 to 25, wherein the step of estimating is based on a classifier which has been trained based on supervised training.

27. Method according to one of the preceding embodiments, further comprising: providing summary statistics based at least on the detected event.

28. Method according to one of the preceding embodiments, further comprising the step:

estimating the speed of a ball based on the time-series, if an event associated with a kick is detected.

29. System for associating frames in a video of an activity of a person with an event, being adapted to perform a method according to one of the preceding embodiments.

30. System for associating frames in a video of an activity of a person with an event, comprising:

a. at least one camera for recording a video of an activity of a person;

b. at least one sensor assembly comprising at least one sensor being capable to be coupled to a person while the person is performing the activity;

c. memory for storing a time-series of sensor data obtained from the at least one sensor; and

d. a processor for synchronizing the video with the sensor data, for detecting an event in the time-series, and for associating the event with at least one corresponding frame in the video showing the event.

31. System according to embodiment 30, wherein the sensor assembly is adapted to be coupled to the body of the person.

32. System according to one of embodiments 30 to 31, wherein the sensor assembly is adapted to be attached to a strap or bracelet.

33. System according to one of embodiments 30 to 32, further comprising a wearable device comprising the sensor assembly.

34. System according to one of embodiments 30 to 33, wherein the sensor assembly comprises the memory.

35. System according to one of embodiments 30 to 34 comprising at least two cameras.

36. Computer program comprising instructions which cause a computer to perform a method according to one of embodiments 1 to 28, when executed.

**Claims**

1. Method for associating frames in a video of an activity of a person with an event, comprising the steps:

   a. recording a video of an activity of a person;

   b. storing a time-series of sensor data (82) obtained from a sensor assembly (12) comprising at least one sensor (31, 32, 33, 34, 35) coupled to the person while the person is performing the activity;

   c. synchronizing the video with the sensor data (82);

   d. detecting an event in the time-series; and

   e. associating the event with at least one corresponding frame in the video showing the event.

2. Method according to the preceding claim, further comprising the step: using the at least one frame to generate a second video showing predetermined events of the activity of the person.

3. Method according to one of the preceding claims, wherein the step of synchronizing the video with the sensor data (82) comprises:

   detecting a predetermined synchronization event in the time-series and in at least one frame in the video.

4. Method according to one of the preceding claims, wherein the activity is a sports activity.

5. Method according to one of the preceding claims, wherein the activity is soccer.

6. Method according to one of the preceding claims, wherein the event is a kick, a short pass, a long pass, a shot, or control of a ball.

7. Method according to one of the preceding claims, wherein the at least one sensor (31, 32, 33, 34, 35) is an accelerometer (31), a gyroscope (32), or a magnetic field sensor (33).

8. Method according to one of the preceding claims, wherein the sensor assembly (12) comprises two or more sensors (31, 32, 33, 34, 35) and the sensor data (82) from the two or more sensors (31, 32, 33, 34, 35) are combined in the time-series.

9. Method according to one of the preceding claims, wherein the step of recording the video of the activity of the person comprises recording the video with at least two cameras.

10. Method according to one of the preceding claims, further comprising the step of saving the video in a database.

11. System for associating frames in a video of an activity of a person with an event, comprising:

a. at least one camera (11, 11a, 11b, 11c, 11d, 11e) for recording a video of an activity of a person;

b. at least one sensor assembly (12) comprising at least one sensor (31, 32, 33, 34, 35) being capable to be coupled to a person while the person is performing the activity;

c. memory (13) for storing a time-series of sensor data (82) obtained from the at least one sensor (31, 32, 33, 34, 35); and

d. a processor (14) for synchronizing the video with the sensor data (82), for detecting an event in the time-series, and for associating the event with at least one corresponding frame in the video showing the event.

12. System according to claim 11, wherein the sensor assembly (12) is adapted to be coupled to the body of the person.

13. System according to one of claims 11 to 12, wherein the sensor assembly (12) is adapted to be attached to a strap (41) or bracelet.

14. System according to one of claims 11 to 13, further comprising a wearable device comprising the sensor assembly (12).

15. Computer program comprising instructions which cause a computer to perform a method according to one of claims 1 to 10, when executed.

FIG 1

FIG 2

## FIG 3

35 — TEMP
34 — BAROM
31 — ACC
32 — GYRO
33 — MAG
38 — Connector
37 — RTC

39
Transceiver
(WIFI, BTLE,
RFID, NFC,
ZigBee, ANT)

12

Display — 313
GPS — 312
Memory — 13
Switch — 314

μC
36

BATT
310

Inductive coil
311

## FIG 4

12
41

FIG 5

FIG 6

# FIG 7

51a, 51b    71    73

12

7◁  ○ ○ ○ ○ ○ ○ ○

72

# FIG 8

81

| Sensor Data | — 82 |
| Preprocessing | — 83 |
| Segmentation | — 84 |
| Outlier Detection | — 85 |
| Feature Extraction | — 86 |
| Classification | — 87 |

FIG 9

FIG 10

## FIG 11

$\tilde{x}_2$

optimal
hyperplane

115

114

112

111

113

$\tilde{x}_1$

## FIG 12

SP: Short pass
CO: Control
LP: Long pass
ST: Shot

BASE

SP/CO          MISC          LP/ST

SPCO

SP          CO

LPST

LP          ST

Europäisches
Patentamt

European
Patent Office

Office européen
des brevets

# EUROPEAN SEARCH REPORT

Application Number

EP 16 16 6159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 02/067187 A1 (GOLFTEC INC [US]) 29 August 2002 (2002-08-29) * page 5, line 15 - page 9, line 30 * * page 13, lines 5-23 * ----- | 1-15 | INV. G11B27/031 G11B27/10 G11B27/19 G11B27/30 A63B69/00 |
| X | US 2014/334796 A1 (GALANT YARON [US] ET AL) 13 November 2014 (2014-11-13) * paragraphs [0028] - [0035], [0050] - [0052], [0149] * ----- | 1-15 | |
| X | US 2002/115047 A1 (MCNITT MICHAEL JOHN [US] ET AL) 22 August 2002 (2002-08-22) * paragraphs [0010] - [0017], [0040], [0049], [0050] * ----- | 1-15 | |
| X | US 2013/245966 A1 (BURROUGHS BRANDON S [US] ET AL) 19 September 2013 (2013-09-19) * paragraphs [0053], [0058] - [0060], [0134], [0135], [0170] - [0173] * ----- | 1-15 | |
| A | US 2013/130843 A1 (BURROUGHS BRANDON S [US] ET AL) 23 May 2013 (2013-05-23) * paragraphs [0080], [0149], [0150] * ----- | 6,13 | TECHNICAL FIELDS SEARCHED (IPC) G11B A63B G06F H04N |

The present search report has been drawn up for all claims

| Place of search | Date of completion of the search | Examiner |
|---|---|---|
| The Hague | 15 September 2016 | Mourik, Piet |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 16 6159

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2016

| Patent document cited in search report | | Publication date | Patent family member(s) | | Publication date |
|---|---|---|---|---|---|
| WO 02067187 | A1 | 29-08-2002 | US | 2002114493 A1 | 22-08-2002 |
| | | | WO | 02067187 A1 | 29-08-2002 |
| US 2014334796 | A1 | 13-11-2014 | US | 2014334796 A1 | 13-11-2014 |
| | | | WO | 2014182494 A1 | 13-11-2014 |
| US 2002115047 | A1 | 22-08-2002 | US | 2002115047 A1 | 22-08-2002 |
| | | | WO | 02066119 A1 | 29-08-2002 |
| US 2013245966 | A1 | 19-09-2013 | NONE | | |
| US 2013130843 | A1 | 23-05-2013 | US | 2013130843 A1 | 23-05-2013 |
| | | | US | 2014074263 A1 | 13-03-2014 |
| | | | US | 2014288682 A1 | 25-09-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012123733 A1
- US 20120167684 A1
- US 8702516 B2
- US 20130274635 A1
- US 20130274904 A1
- WO 02067187 A1
- DE 102006060482 A1
- US 20150105884 A1

**Non-patent literature cited in the description**

- **SHAOYAN ZHANG ; ALEX V. ROWLANDS ; PETER MURRAY ; TINA L. HURST.** Physical Activity Classification Using the GENEA Wrist-Worn Accelerometer. *Medicine & Science in Sports & Exercise,* 2012, vol. 44 (4), 742-748
- **BERNHARD SCHÖLKOPF ; JOHN C. PLATT ; JOHN SHAWE-TAYLOR ; ALEX J. SMOLA ; ROBERT C. WILLIAMSON.** Estimating the Support of a High-Dimensional Distribution. *Neural Computation,* 2001, vol. 13 (7), 1443-1471
- **ALVIN C. RENCHER ; WILLIAM F. CHRISTENSEN.** Methods of multivariate analysis. John Wiley & Sons, 2012
- **MARTIN VETTERLI ; CORMAC HERLEY.** Wavelets and filter banks: Theory and design. *IEEE Transactions on Signal Processing,* 1992, vol. 40 (9), 2207-2232
- **LEO BREIMAN.** Random forests. *Machine learning,* 2001, vol. 45 (1), 5-32
- **SERGIOS THEODORIDIS ; KONSTANTINOS KOUTROUMBAS.** Pattern Recognition. Elsevier, 2008
- **RICHARD O. DUDA ; PETER E. HART ; DAVID G. STORK.** Pattern Classification. John Wiley & Sons, 2000
- **TREVOR HASTIE ; ROBERT TIBSHIRANI ; JEROME FRIEDMAN.** The elements of statistical learning. Springer, 2009, vol. 2
- **ALEX J. SMOLA ; BERNHARD SCHÖLKOPF.** A tutorial on support vector regression. *Statistics and Computing,* 2004, vol. 14 (3), 199-222
- **WILLIAM F. MASSY.** Principal Components Regression in Exploratory Statistical Research. *Journal of the American Statistical Association,* 1965, vol. 60 (309), 234-256